# EUROPEAN PATENT SPECIFICATION

(11) **EP 2 940 981 B1**
(45) Date of publication and mention of the grant of the patent: **15.07.2020**
(21) Application number: 15162028.3
(22) Date of filing: 31.03.2015
(51) Int. Cl.: H04N 1/32

(54) **METHOD AND DEVICE FOR SYNCHRONIZING PHOTOGRAPHS**
VERFAHREN UND VORRICHTUNG ZUR SYNCHRONISIERUNG VON FOTOGRAFIEN
PROCÉDÉ ET DISPOSITIF POUR SYNCHRONISER DES PHOTOGRAPHIES

(30) Priority: 29.04.2014 CN 201410177513
(43) Date of publication of application: 04.11.2015
(73) Proprietor: Xiaomi Inc., Beijing 100085 (CN)
(72) Inventor: Cai, Jingwei, 100085 Haidian District (CN); Guo, Tao, 100085 Haidian District (CN); Jiang, Hai, 100085 Haidian District (CN)
(74) Representative: Reeve, Nicholas Edward

(56) References cited:
- US-A1- 2010 265 385
- US-A1- 2013 077 880
- US-A1- 2013 215 108
- US-A1- 2013 329 068

## Description

### TECHNICAL FIELD

The present disclosure generally relates to the field of terminal technology, and particularly, to a method and a device for synchronizing a photograph.

### BACKGROUND

UbiFocus is a kind of technology of photographing first and focusing afterwards, to facilitate re-focusing for a photograph after it is taken. Such technology allows a user to take a photograph first and focus for the photograph afterwards, by which the user can arbitrarily select a focus point in the photograph that has been already taken, to achieve different effects of field depth.

Ubifocus photographing improves the user experience. Accordingly, it becomes an urgent need of users to upload an Ubifocus photograph to a cloud and synchronize it among a plurality of terminals. By this implementation, not only burden on a local storage may be lessened, but also photograph data of users may be more secured, and moreover, a user is allowed to similarly perform Ubifocus refocusing on a terminal that does not support Ubifocus photographing.

In the related art, in case where a group of Ubifocus photographs is displayed in a cloud, one of the Ubifocus photographs is typically displayed as an index in a default manner. In case where the Ubifocus index photograph needs to be replaced by the user, the modified Ubifocus index photograph has to be re-uploaded to the cloud.

Accordingly, during the process of uploading the replaced Ubifocus index photograph, traffic and bandwidth of the network are occupied due to the re-uploading of the Ubifocus index photograph. In particular, in case where the data amount of the replaced Ubifocus index photograph is relatively large, the efficiency of uploading photographs is greatly reduced.

US 2013/0077880 A1 discloses systems and methods configured to store images synthesized from light field image data and metadata describing the images. US 2013/0329068 A1 discloses an image apparatus which determines ranks of targets to be in focus based on history information indicating operation history, and generates sequentially combined image data from multi-viewpoint image data obtained by capturing images from multiple viewpoints, by focusing on the targets in accordance with the determined ranks. US 2010/0265385 A1 discloses devices and methods which acquire light field data and configuration data. US 2013/0215108 A1 discloses systems and methods for manipulation of captured light fields and captured light field image data.

### SUMMARY

In order to overcome the problems in the related art, a method and a device for synchronizing a photograph are provided by the present disclosure, which may save network resources occupied by the synchronizing.
(1) According to a first aspect of embodiments of the present disclosure, there is provided a method for synchronizing a photograph between a terminal and a server, including: sending an instruction for synchronizing a re-focusable photograph to the terminal; receiving a notice message about whether the terminal supports display of re-focusable photographs returned from the terminal; issuing data for downloading a re-focusable photograph group to the terminal, if the terminal supports display of re-focusable photographs; and issuing an index photograph of the re-focusable photograph group to the second terminal, if the terminal does not support display of re-focusable photographs. Furthermore, the issuing data for downloading a re-focusable photograph group to the terminal if the terminal supports display of re-focusable photographs includes: issuing the data for downloading a re-focusable photograph group to the terminal, wherein the data for downloading a re-focusable photograph group at least comprise: an ID of the re-focusable photograph group, path information of each photograph in the re-focusable photograph group, intra-group numbers respectively corresponding to the photographs in the re-focusable photograph group and an intra-group number corresponding to the index photograph in the re-focusable photograph group, and the ID identifies the re-focusable photograph group to be issued, the path information respectively correspond to storage path information of each photograph in the re-focusable photograph group, and the intra-group number identifies a photograph in the re-focusable photograph group; and issuing each photograph in the re-focusable photograph group to the terminal, and setting an index photograph of the re-focusable photograph group according to the intra-group number corresponding to the index photograph. Furthermore, in case where the index photograph of the re-focusable photograph group is to be replaced, the method includes: issuing information for replacing an index photograph to the terminal if the terminal supports display of re-focusable photographs, wherein the terminal replaces the index photograph of the re-focusable photograph group, and the information for replacing an index photograph includes: the ID and an intra-group number corresponding to an index photograph to be replaced; and issuing an index photograph to be replaced of the re-focusable photograph group to the terminal to replace an index photograph to be replaced, if the terminal does not support display of re-focusable photographs.
(2) According to paragraph (1), further, the issuing each photograph in the re-focusable photograph group to the terminal includes: issuing the index photograph of the re-focusable photograph group firstly to the terminal, according to the intra-group number corresponding to the index photograph of the re-focusable photograph group.
(3) According to paragraphs (1) to (2), further, the index photograph issued to the terminal is a thumbnail corresponding to the photograph or photograph data.
(4) According to paragraphs (1) to (2), further, each of the photographs in the re-focusable photograph group issued to the terminal is a thumbnail corresponding to the photograph respectively or photograph data.
(5) According to a second aspect of embodiments of the present disclosure, there is provided a method for synchronizing a photograph between a terminal and a server, including: receiving an instruction for synchronizing a re-focusable photograph sent from the server; returning a notice message about whether display of re-focusable photographs is supported to the server; receiving data for downloading a re-focusable photograph group issued from the server, if display of re-focusable photographs is supported; and receiving an index photograph of the re-focusable photograph group issued from the server, if display of re-focusable photographs is not supported. Furthermore, the receiving data for downloading a re-focusable photograph group issued from the server if display of re-focusable photographs is supported includes: receiving the data for downloading a re-focusable photograph group issued from the server, wherein the data for downloading a re-focusable photograph group at least includes: an ID of the re-focusable photograph group, path information of each photograph in the re-focusable photograph group, intra-group numbers respectively corresponding to the photographs in the re-focusable photograph group and an intra-group number corresponding to the index photograph in the re-focusable photograph group, and the ID identifies the re-focusable photograph group to be issued, the path information respectively correspond to storage path information of each photograph in the re-focusable photograph group, and the intra-group number identifies a photograph in the re-focusable photograph group; downloading each photograph in the re-focusable photograph group issued from the server according to the path information; and setting an index photograph of the re-focusable photograph group according to the intra-group number corresponding to the index photograph. Furthermore, in case where the index photograph of the re-focusable photograph group is to be replaced, the method includes: receiving information for replacing an index photograph issued from the server, if display of re-focusable photographs is supported, wherein the information for replacing an index photograph includes: the ID and an intra-group number corresponding to an index photograph to be replaced; and replacing the index photograph of the re-focusable photograph group identified by the ID according to the ID and the intra-group number corresponding to an index photograph to be replaced; and receiving an index photograph to be replaced of the re-focusable photograph group issued from the server, to replace an index photograph to be replaced, if display of re-focusable photographs is not supported.
(6) According to paragraph (5), further, the downloading each photograph in the re-focusable photograph group issued from the server according to the path information includes: downloading the index photograph of the re-focusable photograph group firstly, according to the intra-group number corresponding to the index photograph of the re-focusable photograph group.
(7) According to paragraphs (5) to (6), further, the index photograph issued by the server is a thumbnail corresponding to the photograph or photograph data.
(8) According to paragraphs (5) to (6), further, each of the photographs in the re-focusable photograph group issued by the server is a thumbnail corresponding to the photograph respectively or photograph data.
(9) According to a third aspect of embodiments of the present disclosure, there is provided a server, including: a synchronization instruction sending module, configured to send an instruction for synchronizing a re-focusable photograph to a terminal; a notice message receiving module, configured to receive a notice message about whether the terminal supports display of re-focusable photographs returned from the terminal; a first issuing module, configured to issue data for downloading a re-focusable photograph group to the terminal, if the terminal supports display of re-focusable photographs; and a second issuing module, configured to issue an index photograph of the re-focusable photograph group to the terminal, if the terminal does not support display of re-focusable photographs. Furthermore, the first issuing module includes: a downloaded data issuing unit, configured to issue the data for downloading a re-focusable photograph group to the terminal, wherein the data for downloading a re-focusable photograph group at least comprise: an ID of the re-focusable photograph group, path information of each photograph in the re-focusable photograph group, intra-group numbers respectively corresponding to the photographs in the re-focusable photograph group and an intra-group number corresponding to the index photograph in the re-focusable photograph group, and the ID identifies the re-focusable photograph group to be issued, the path information respectively correspond to storage path information of each photograph in the re-focusable photograph group, and the intra-group number identifies a photograph in the re-focusable photograph group; and a photograph issuing unit, configured to issue each photograph in the re-focusable photograph group to the terminal, and set an index photograph of the re-focusable photograph group according to the intra-group number corresponding to the index photograph. Furthermore, the server includes: a first replacement information issuing module, configured to issue information for replacing an index photograph to the terminal, if the terminal supports display of re-focusable photographs, wherein the terminal replaces the index photograph of the re-focusable photograph group, and the information for replacing an index photograph comprises: the ID and an intra-group number corresponding to an index photograph to be replaced; and a second replacement information issuing module, configured to issue an index photograph to be replaced of the re-focusable photograph group to the terminal to replace an index photograph to be replaced, if the terminal does not support display of re-focusable photographs.
(10) According to paragraph (9), further, the photograph issuing unit is configured to issue the index photograph of the re-focusable photograph group firstly to the terminal, according to the intra-group number corresponding to the index photograph of the re-focusable photograph group.
(11) According to paragraphs (9) to (10), further, the index photograph issued to the terminal is a thumbnail corresponding to the photograph or photograph data.
(12) According to paragraphs (9) to (10), further, each of the photographs in the re-focusable photograph group issued to the terminal is a thumbnail corresponding to the photograph respectively or photograph data.
(13) According to an fourth aspect of embodiments of the present disclosure, there is provided a terminal, including: a synchronization instruction receiving module, configured to receive an instruction for synchronizing a re-focusable photograph sent from a server; a notice message returning module, configured to return a notice message about whether display of re-focusable photographs is supported to the server; a first data receiving module, configured to receive data for downloading a re-focusable photograph group issued from the server, if display of re-focusable photographs is supported; and a second data receiving module, configured to receive an index photograph of the re-focusable photograph group issued from the server, if display of re-focusable photographs is not supported. Furthermore, the first data receiving module includes: a downloaded data receiving unit, configured to receive the data for downloading a re-focusable photograph group issued from the server, wherein the data for downloading a re-focusable photograph group at least comprises: an ID of the re-focusable photograph group, path information of each photograph in the re-focusable photograph group, intra-group numbers respectively corresponding to the photographs in the re-focusable photograph group and an intra-group number corresponding to the index photograph in the re-focusable photograph group, and the ID identifies the re-focusable photograph group to be issued, the path information respectively correspond to storage path information of each photograph in the re-focusable photograph group, and the intra-group number identifies a photograph in the re-focusable photograph group; a photograph downloading unit, configured to download each photograph in the re-focusable photograph group issued from the server according to the path information; and an index photograph setting unit, configured to set an index photograph of the re-focusable photograph group according to the intra-group number corresponding to the index photograph. Furthermore, the terminal includes: a first replacement information receiving module, configured to receive information for replacing an index photograph issued from the server, if display of re-focusable photographs is supported, wherein the information for replacing an index photograph comprises: the ID and an intra-group number corresponding to an index photograph to be replaced; and replace the index photograph of the re-focusable photograph group identified by the ID according to the ID and the intra-group number corresponding to an index photograph to be replaced; and a second replacement information receiving module, configured to receive an index photograph to be replaced of the re-focusable photograph group issued from the server, to replace an index photograph to be replaced, if display of re-focusable photographs is not supported.
(14) According to paragraph (13), further, the photograph downloading unit is configured to download the index photograph of the re-focusable photograph group firstly, according to the intra-group number corresponding to the index photograph of the re-focusable photograph group.
(15) According to paragraphs (13) to (14), further, the index photograph issued by the server is a thumbnail corresponding to the photograph or photograph data.
(16) According to paragraphs (13) to (14), further, each of the photographs in the re-focusable photograph group issued by the server is a thumbnail corresponding to the photograph respectively or photograph data.
(17) According to a fifth aspect of the embodiments of the present disclosure, there provides a computer program, which when executing on a processor of a server, performs a method of the above aspects of the embodiments of the present disclosure.
(18) According to a sixth aspect of the embodiments of the present disclosure, there provides a computer program, which when executing on a processor of a terminal, performs a method of the above aspects of the embodiments of the present disclosure.

Some advantageous effects of the technical solutions provided by the embodiments of the present disclosure may include: in the present disclosure, during the time a terminal uploads a re-focusable photograph group to be synchronized to a binding server in a cloud, the servers assigns an ID to the re-focusable photograph group, and the terminal assigns an intra-group number to each photograph in the re-focusable photograph group. After an index photograph is determined, an intra-group number corresponding to the index photograph is informed to the server. Since the server learns about each intra-group number of each of the photograph in the re-focusable photograph group, in case where the index photograph of the re-focusable photograph group uploaded by the terminal needs to be replaced subsequently, the index photograph to be replaced does not need to be re-uploaded, but only the intra-group number corresponding to the index photograph to be replaced and the corresponding ID need to be uploaded, thereby, network resources occupied by synchronizing the photograph may be saved.

It should be understood that both the foregoing general description and the following detailed description are exemplary and explanatory only and do not intend to limit the disclosure.

### BRIEF DESCRIPTION OF THE DRAWINGS

The accompanying drawings, which are incorporated in and constitute a part of this specification, illustrate embodiments consistent with the disclosure and, together with the description, serve to explain the principles of the disclosure.
Fig. 1 is a flow chart showing a method for synchronizing a photograph according to an embodiment of the present disclosure;
Fig. 2 is a flow chart showing another method for synchronizing a photograph based on the embodiment shown in Fig. 1;
Fig. 3 is a flow chart showing a method for synchronizing a photograph on a server side according to an embodiment of the present disclosure;
Fig. 4 is a flow chart showing another method for synchronizing a photograph based on the embodiment shown in Fig. 4;
Fig. 5 is a flow chart showing another method for synchronizing a photograph on a server side according to an embodiment of the present disclosure;
Fig. 6 is a detailed flow chart showing the step S503 in Fig. 5;
Fig. 7 is a flow chart showing still another method for synchronizing a photograph on a server side according to an embodiment of the present disclosure;
Fig. 8 is a flow chart showing a method for synchronizing a photograph on a second terminal side according to an embodiment of the present disclosure;
Fig. 9 is a detailed flow chart showing the step S803 in Fig. 5;
Fig. 10 is a flow chart showing another method for synchronizing a photograph on a second terminal side according to an embodiment of the present disclosure;
Fig. 11 is a block diagram showing a first terminal according to an embodiment of the present disclosure;
Fig. 12 is a block diagram showing another first terminal according to an embodiment of the present disclosure;
Fig. 13 is a block diagram showing a server according to an embodiment of the present disclosure;
Fig. 14 is a block diagram showing another server according to an embodiment of the present disclosure;
Fig. 15 is a block diagram showing still another server according to an embodiment of the present disclosure;
Fig. 16 is a block diagram showing a first issuing module 153 in Fig. 15;
Fig. 17 is a block diagram showing still another server according to an embodiment of the present disclosure;
Fig. 18 is a block diagram showing a second terminal according to an embodiment of the present disclosure;
Fig. 19 is a block diagram showing a first data receiving module 183 in Fig. 18;
Fig. 20 is a block diagram showing another second terminal according to an embodiment of the present disclosure;
Fig. 21 is a block diagram showing a terminal device according to an embodiment of the present disclosure; and
Fig. 22 is a block diagram showing a server according to an embodiment of the present disclosure.

Through the above accompany drawings and the specific embodiments of the disclosure have been illustrated, for which a more detailed description may be given as below. These drawings and the textual description are not intended to limit the scope of the invention to specific embodiments, but to explain the invention to those skilled in the art with reference to particular embodiments.

### DETAILED DESCRIPTION

In the following, a detailed description may be given to exemplary embodiments, examples of which are illustrated in the accompany drawings. Where an accompany drawing is referred in the following description, the same number indicates same or similar elements in different accompany drawings, unless specified otherwise. The embodiments described in the following exemplary embodiments do not represent all of the embodiments in consistent with the present invention. On the contrary, they are only examples of apparatus and methods inconsistent with the invention as set forth in the appended claims.

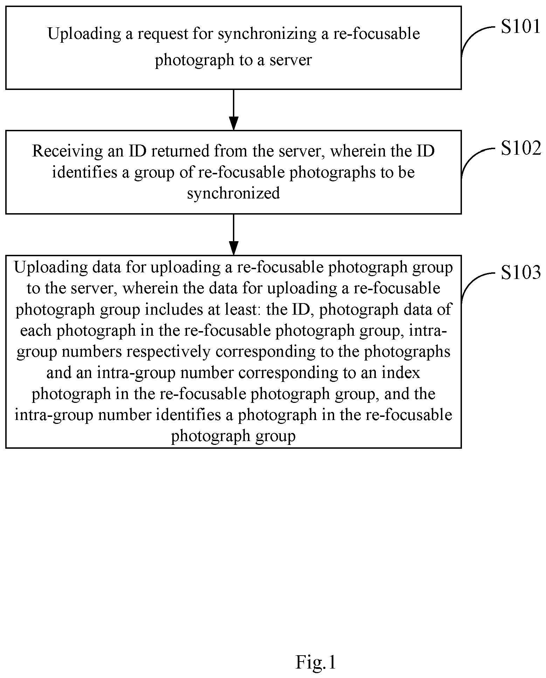

Fig. 1 is a flow chart showing a method for synchronizing a photograph according to an embodiment of the present disclosure. As shown in Fig. 1, the method for synchronizing a photograph is applied to a terminal, and may include the following steps.

In step S101, a request for synchronizing a re-focusable photograph is uploaded to a server.

In step SI02, an ID returned from the server is received, wherein the ID identifies a group of re-focusable photographs to be synchronized.

In steps SI03, data for uploading a re-focusable photograph group is uploaded to the server, wherein the data for uploading a re-focusable photograph group at least includes: the ID, photograph data of each photograph in the re-focusable photograph group, intra-group numbers respectively corresponding to the photographs and an intra-group number corresponding to an index photograph in the re-focusable photograph group, and the intra-group number identifies a photograph in the re-focusable photograph group.

In this embodiment, photograph synchronizing is performed between the terminal and the binding server in a cloud, and the photographs to be synchronized are re-focusable photographs, such as Ubifocus photographs.

In step S101, firstly, a first terminal uploads a request for synchronizing a re-focusable photograph to a server, informing the server it will upload a re-focusable photograph to be synchronized to the server.

Typically, the re-focusable photograph to be synchronized is uploaded to the server in the cloud by a terminal, and then, the server synchronizes the received re-focusable photograph to be synchronized among other binding terminals. In the present disclosure, in order to distinguish the terminals, the terminal that uploads a re-focusable photograph to be synchronized to the server in the cloud is referred to as "a first terminal", and another terminal with which the server synchronizes the photograph is referred to as "a second terminal".

In step S102, the first terminal receives an ID returned from the server, and the server identifies a received re-focusable photograph group through the ID. That is due to the fact that, when uploading re-focusable photographs, the first terminal will typically upload a group of photographs of the same scene but with different focus distances, that is, a re-focusable photograph group. In order to distinguish the different re-focusable photograph groups uploaded by the first terminal, the server assigns an ID to each re-focusable photograph group uploaded by the first terminal, so different re-focusable photograph groups have a different ID, and every photograph in the same re-focusable photograph group have the same ID, i.e., the ID corresponding to the re-focusable photograph group that they belong to. After assigning the ID, the sever returns the ID to the first terminal.

In step S103, after the first terminal receives the ID returned from the server, the first terminal starts to upload data for uploading a re-focusable photograph group to the server, wherein the data for uploading a re-focusable photograph group at least includes: the ID, photograph data of each of the photographs in the re-focusable photograph group, intra-group numbers respectively corresponding to the photographs and an intra-group number corresponding to an index photograph in the re-focusable photograph group. Wherein, each of the photographs in the re-focusable photograph group is assigned with the ID. In addition, the first terminal assigns an intra-group number for each photograph in the re-focusable photograph group, wherein different photograph has a different intra-group number. Each photograph in the re-focusable photograph group is identified through the intra-group number. Thereby, after an index photograph corresponding to a re-focusable photograph group is determined, only the intra-group number corresponding to the index photograph needs to be informed to the server.

In the present disclosure, during the time a terminal uploads a re-focusable photograph group to be synchronized to a binding server in a cloud, the servers assigns an ID to the re-focusable photograph group, and the terminal assigns an intra-group number to each photograph in the re-focusable photograph group. After an index photograph is determined, an intra-group number corresponding to the index photograph is informed to the server. Since the server learns about each intra-group number of each of the photograph in the re-focusable photograph group, in case where the index photograph of the re-focusable photograph group uploaded by the terminal needs to be replaced subsequently, the index photograph to be replaced does not need to be re-uploaded, but only the intra-group number corresponding to the index photograph to be replaced and the corresponding ID need to be uploaded, thereby, network resources occupied by synchronizing the photograph may be saved.

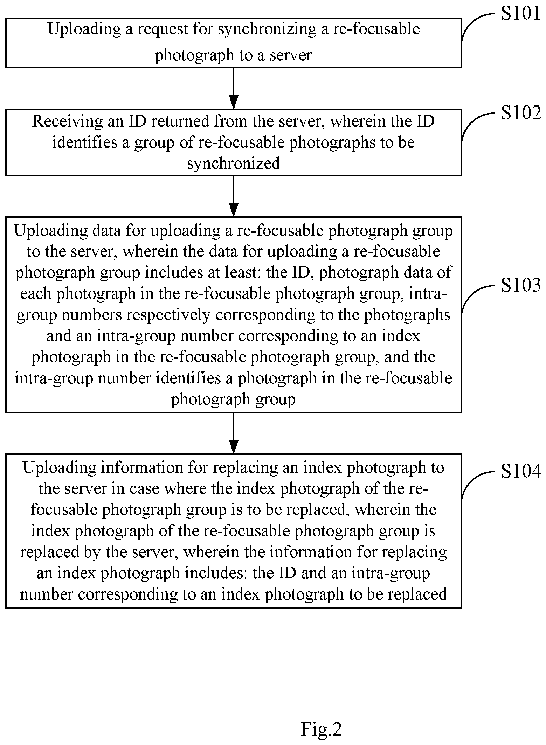

In the following, a process of replacing an index photograph in a re-focusable photograph group is described through an embodiment shown in Fig. 2, and the process may include the following steps.

In step S101, a request for synchronizing a re-focusable photograph is uploaded to a server.

In step SI02, an ID returned from the server is received, wherein the ID identifies a group of re-focusable photographs to be synchronized.

In steps SI03, data for uploading a re-focusable photograph group is uploaded to the server, wherein the data for uploading a re-focusable photograph group at least includes: the ID, photograph data of each of the photographs in the re-focusable photograph group, intra-group numbers respectively corresponding to the photographs and an intra-group number corresponding to an index photograph in the re-focusable photograph group, and the intra-group number identifies each photograph in the re-focusable photograph group.

In step S104, in case where the index photograph of the re-focusable photograph group is to be replaced, information for replacing an index photograph is uploaded to the server, and the index photograph of the re-focusable photograph group is replaced by the server, wherein the information for replacing an index photograph includes: the ID and an intra-group number corresponding to an index photograph to be replaced.

In this embodiment, since the server learns about each intra-group number of each of the photographs in the re-focusable photograph group, in case where the index photograph of the re-focusable photograph group uploaded by the first terminal needs to be replaced subsequently, the index photograph to be replaced does not need to be re-uploaded, but only the information for replacing an index photograph needs to be uploaded, in which the intra-group number corresponding to the index photograph to be replaced and the corresponding ID is carried, and then the index photograph of the re-focusable photograph group is replaced by the server. Accordingly, the index photograph to be replaced does not need to be re-uploaded by the first terminal, but only the intra-group number corresponding to the index photograph to be replaced and the corresponding ID need to be uploaded, thereby, network resources occupied by synchronizing the photograph may be saved.

For the server, since it learns about each intra-group number of each of the photographs in the re-focusable photograph group, upon receiving the intra-group number corresponding to the index photograph to be replaced and the corresponding ID uploaded by the first terminal, the server may determine the index photograph to be replaced according to the intra-group number, and replace the index photograph.

In the following, the process of synchronizing a photograph is described with a specific application scenario.

Taking synchronizing an Ubifocus photograph for example, when a first terminal uploads a group of Ubifocus photographs to a server, each photograph in the Ubifocus photograph group is assigned with an intra-group number and an ID corresponding to the group to which it belongs. In a default manner, for the currently uploaded Ubifocus photograph group, an index photograph displayed is a photograph with an intra-group number 1. When the user needs to change the index photograph to a photograph with an intra-group number 3, the user may send a synchronizing instruction to a server in a cloud, wherein the instruction at least includes: the ID of the Ubifocus photograph group to be changed, and the intra-group number 3 corresponding to the index photograph to be replaced. After receiving the synchronizing instruction, the server in the cloud searches out the corresponding Ubifocus photograph group according to the ID, and sets the photograph with the intra-group number 3 as the index photograph. Accordingly, the photograph with the intra-group number 3 does not need to be re-uploaded, thereby, network resources occupied by synchronizing the photograph may be saved, and synchronization may be achieved in seconds.

In the methods according to the above embodiments, the implementation process of synchronizing a photograph is described from the first terminal side. In the following, an implementation process of synchronizing a photograph may be described from the server side.

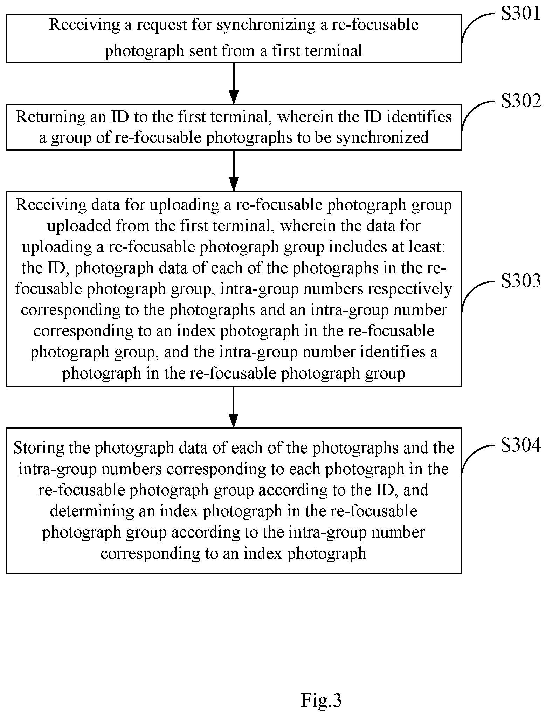

As shown in Fig. 3, which is a flow chart showing a process of synchronizing a photograph on the server side, and the process may include the following steps.

In step S301, a request for synchronizing a re-focusable photograph sent from a first terminal is received.

In step S302, an ID is returned to the first terminal, wherein the ID identifies a group of re-focusable photographs to be synchronized.

In step S303, data for uploading a re-focusable photograph group uploaded from the first terminal is received, wherein the data for uploading a re-focusable photograph group at least includes: the ID, photograph data of each of the photographs in the re-focusable photograph group, intra-group numbers respectively corresponding to the photographs and an intra-group number corresponding to an index photograph in the re-focusable photograph group, and the intra-group number identifies a photograph in the re-focusable photograph group.

In step S304, photograph data of each photograph and intra-group numbers corresponding to each photograph in the re-focusable photograph group are stored according to the ID, and an index photograph in the re-focusable photograph group is determined according to the intra-group number corresponding to an index photograph.

In this embodiment, for uploading re-focusable photographs, the first terminal will typically upload a group of photographs of the same scene but with different focus distances, that is, a re-focusable photograph group. In order to distinguish the different re-focusable photograph groups uploaded by the first terminal, the server assigns an ID to each re-focusable photograph group uploaded by the first terminal, so different re-focusable photograph groups have a different ID, and every photograph in the same re-focusable photograph group have the same ID. After assigning the ID, the sever returns the ID to the first terminal.

After the first terminal receives the ID returned from the server, the first terminal starts to upload data for uploading a re-focusable photograph group to the server, wherein the data for uploading a re-focusable photograph group at least includes: the ID, photograph data of each of the photographs in the re-focusable photograph group, intra-group numbers respectively corresponding to the photographs and an intra-group number corresponding to an index photograph in the re-focusable photograph group. Wherein, each photograph in the re-focusable photograph group is assigned with the ID. In addition, the first terminal assigns an intra-group number for each photograph in the re-focusable photograph group, wherein different photograph has a different intra-group number. Each photograph in the re-focusable photograph group is identified through the intra-group number. Thereby, after an index photograph corresponding to a re-focusable photograph group is determined, only the intra-group number corresponding to the index photograph needs to be informed to the server.

In the present disclosure, during the time a terminal uploads a re-focusable photograph group to be synchronized to a binding server in a cloud, the servers assigns an ID to the re-focusable photograph group, and the terminal assigns an intra-group number to each photograph in the re-focusable photograph group. After an index photograph is determined, an intra-group number corresponding to the index photograph is informed to the server. Since the server learns about each intra-group number of each of the photograph in the re-focusable photograph group, in case where the index photograph of the re-focusable photograph group uploaded by the terminal needs to be replaced subsequently, the index photograph to be replaced does not need to be re-uploaded, but only the intra-group number corresponding to the index photograph to be replaced and the corresponding ID need to be uploaded, thereby, network resources occupied by synchronizing the photograph may be saved.

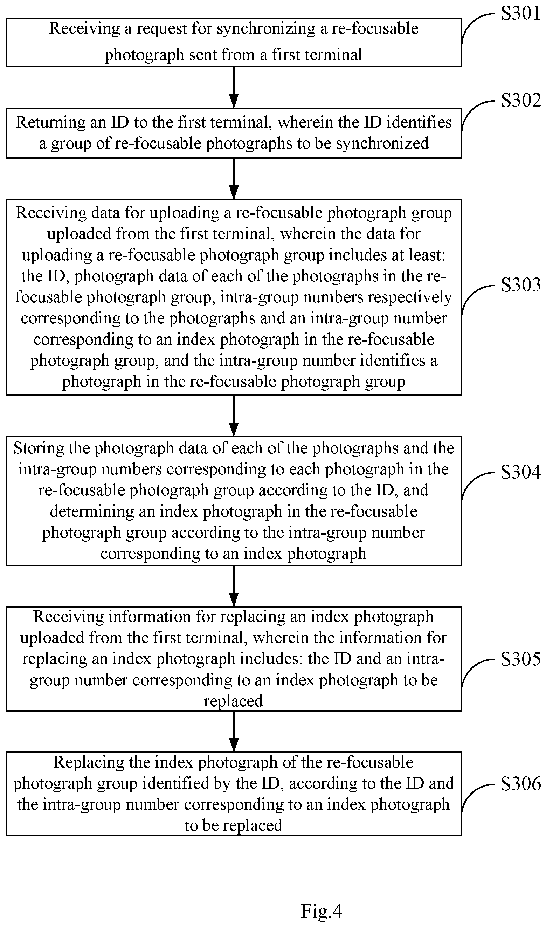

Fig. 4 shows a process of replacing an index photograph of a re-focusable photograph group on a server side according to an embodiment. Based on the embodiment shown in Fig. 3, the process may further include the following steps.

In step S305, information for replacing an index photograph uploaded from the first terminal is received, wherein the information for replacing an index photograph includes: the ID and an intra-group number corresponding to an index photograph to be replaced.

In step S306, the index photograph of the re-focusable photograph group identified by the ID is replaced, according to the ID and the intra-group number corresponding to an index photograph to be replaced.

In this embodiment, since the server learns about each intra-group number of each of the photographs in the re-focusable photograph group, in case where the index photograph of the re-focusable photograph group uploaded by the first terminal needs to be replaced subsequently, the index photograph to be replaced does not need to be re-uploaded, but only the information for replacing an index photograph needs to be uploaded, in which the intra-group number corresponding to the index photograph to be replaced and the corresponding ID is carried, and then the index photograph of the re-focusable photograph group is replaced by the server. Since the index photograph to be replaced does not need to be re-uploaded by the first terminal, but only the intra-group number corresponding to the index photograph to be replaced and the corresponding ID need to be uploaded, network resources occupied by synchronizing the photograph may be saved. Since the server learns about each intra-group number of each of the photographs in the re-focusable photograph group, upon receiving the intra-group number corresponding to the index photograph to be replaced and the corresponding ID uploaded by the first terminal, the server may determine the index photograph to be replaced according to the intra-group number, and replace the index photograph.

In the present disclosure, after the server receives a re-focusable photograph group uploaded by the first terminal, the re-focusable photograph group may be synchronized to a binding second terminal. In the following, a synchronization process is described in detail.

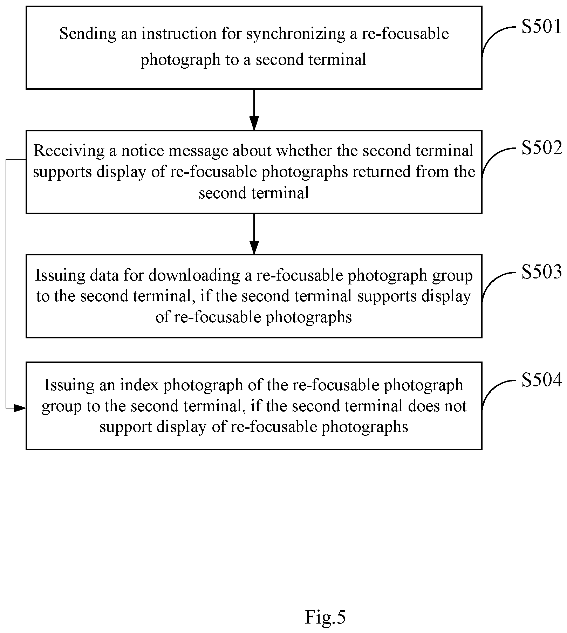

Fig. 5 shows a process of synchronizing a photograph to a second terminal according to an embodiment, and the process may include the following steps.

In step S501, an instruction for synchronizing a re-focusable photograph is sent to a second terminal.

In step S502, a notice message about whether the second terminal supports display of re-focusable photographs returned from the second terminal is received.

In step S503, if the second terminal supports display of re-focusable photographs, data for downloading a re-focusable photograph group is issued to the second terminal.

In step S504, if the second terminal does not support display of re-focusable photographs, an index photograph of the re-focusable photograph group is issued to the second terminal.

In practical application, implementations for synchronizing a photograph to a second terminal by the server may be different depending on whether the second terminal supports display of re-focusable photographs or not. Thus, the server needs to firstly confirm whether the second terminal supports display of re-focusable photographs. In this regard, the server needs to send an instruction for synchronizing a re-focusable photograph to the second terminal, to inform the second terminal that synchronizing a re-focusable photograph is about to be started. The second terminal returns a notice message about whether it supports display of re-focusable photographs to the server. The contents of the notice message includes: supporting display of re-focusable photographs or not supporting display of re-focusable photographs. After the server receives the notice message returned from the second terminal, if the second terminal supports display of re-focusable photographs, the server issues data for downloading a re-focusable photograph group to the second terminal, and if the second terminal does not support display of re-focusable photographs, the server directly issues an index photograph of the re-focusable photograph group to the second terminal.

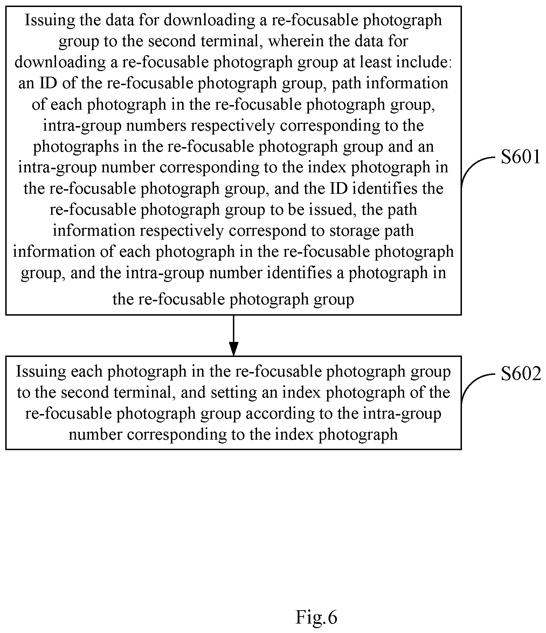

In an embodiment shown in Fig. 6, in case where the second terminal supports display of re-focusable photographs, a detailed process of issuing data for downloading a re-focusable photograph group to the second terminal by the server may include the following steps.

In step S601, the data for downloading a re-focusable photograph group is issued to the second terminal, wherein the data for downloading a re-focusable photograph group at least include: an ID of the re-focusable photograph group, path information of each photograph in the re-focusable photograph group, intra-group numbers respectively corresponding to the photographs in the re-focusable photograph group and an intra-group number corresponding to the index photograph in the re-focusable photograph group, and the ID identifies the re-focusable photograph group to be issued, the path information respectively correspond to storage path information of each photograph in the re-focusable photograph group, and the intra-group number identifies a photograph in the re-focusable photograph group.

In step S602, each photograph in the re-focusable photograph group are issued to the second terminal, and an index photograph of the re-focusable photograph group is set according to the intra-group number corresponding to the index photograph.

In this embodiment, the data for downloading a re-focusable photograph group issued by the server may carry the ID of the re-focusable photograph group to be issued, intra-group numbers and the ID assigned respectively to each photograph in the re-focusable photograph group, the intra-group number corresponding to the index photograph in the re-focusable photograph group and path information of each photograph in the re-focusable photograph group, wherein the path information respectively correspond to storage path information of each photograph in the re-focusable photograph group, and an intra-group number identifies a photograph in the re-focusable photograph group. While the server issues each photograph in the re-focusable photograph group to the second terminal, the server sets an index photograph of the re-focusable photograph group according to the intra-group number corresponding to the index photograph.

It should be noted that, the index photograph of the re-focusable photograph group may be issued firstly to the second terminal, according to the intra-group number corresponding to the index photograph of the re-focusable photograph group.

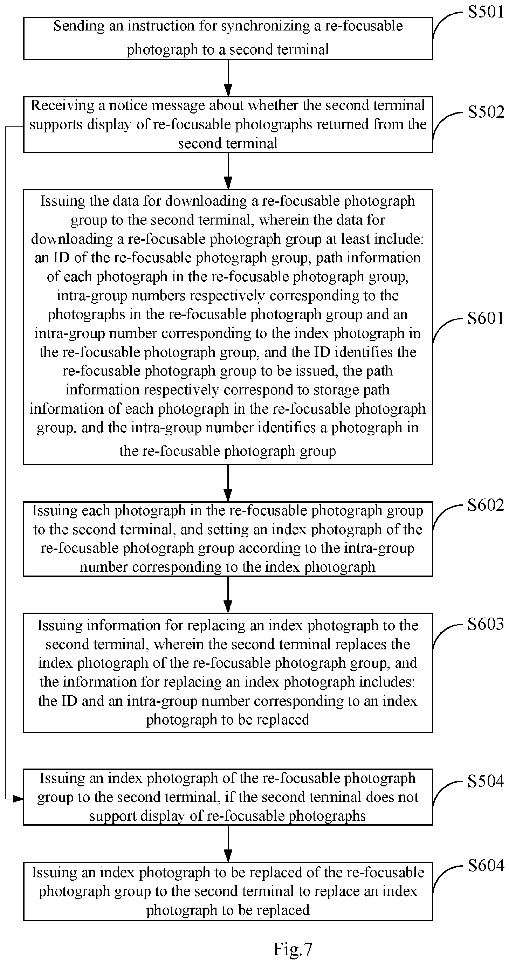

In case where the index photograph of the re-focusable photograph group needs to be replaced, based on the process shown in Fig. 6, the process as shown in Fig. 7 may further include the following steps.

In step S603, if the second terminal supports display of re-focusable photographs, information for replacing an index photograph is issued to the second terminal, and the second terminal replaces the index photograph of the re-focusable photograph group, wherein the information for replacing an index photograph includes: the ID and an intra-group number corresponding to an index photograph to be replaced.

In step S604, if the second terminal does not support display of re-focusable photographs, an index photograph to be replaced of the re-focusable photograph group is issued to the second terminal to replace an index photograph to be replaced.

Accordingly, if the second terminal supports display of re-focusable photographs, the server may issue an intra-group number and an ID corresponding to an index photograph to be replaced such that the second terminal may replace the index photograph of the re-focusable photograph group accordingly. If the second terminal does not support display of re-focusable photographs, an index photograph to be replaced of the re-focusable photograph group needs to be directly issued to the second terminal to replace an index photograph to be replaced.

For the same reason, during the time the server synchronizes a photograph downward, in case where the first terminal replaces the index photograph of the re-focusable photograph group that has been uploaded, the index photograph to be replaced does not need to be re-issued to a second terminal that supports display of re-focusable photographs, but only an intra-group number and an ID corresponding to the index photograph to be replaced of the re-focusable photograph group need to be issued, thereby, network resources occupied by synchronizing the photograph may be saved.

It should be noted that, in this embodiments, an index photograph that the server issues to the second terminal may be a thumbnail corresponding to the photograph or photograph data. In addition, each photograph in the re-focusable photograph group that the server issues to the second terminal may be a thumbnail corresponding to the photograph respectively or photograph data.

In practical application, data amount of a thumbnail is typically smaller than that of an original photograph. In case where a thumbnail is synchronized, the demand of the user for generally exploring may be satisfied, and meantime the network traffic may be saved. In this case, only when the user clicks the thumbnail, the original photograph data may be downloaded from the server in the cloud. However, if network traffic is not a concern, the original photograph data may be directly synchronized.

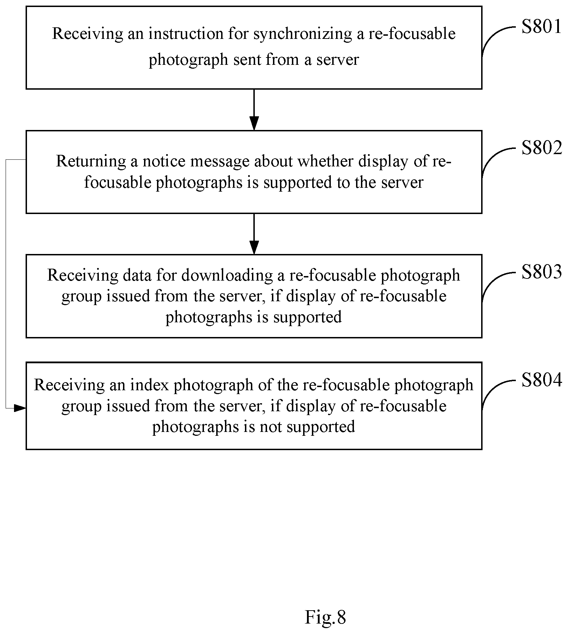

In the above embodiments, a process of synchronizing a photograph is described from the server side. As shown in Fig. 8, a process of synchronizing a photograph is also described on a second terminal side. The implementation process may include the following steps.

In step S801, an instruction for synchronizing a re-focusable photograph sent from a server is received.

In step S802, a notice message about whether display of re-focusable photographs is supported is returned to the server.

In step S803, if display of re-focusable photographs is supported, data for downloading a re-focusable photograph group issued from the server is received.

In step S804, if display of re-focusable photographs is not supported, an index photograph of the re-focusable photograph group issued from the server is received.

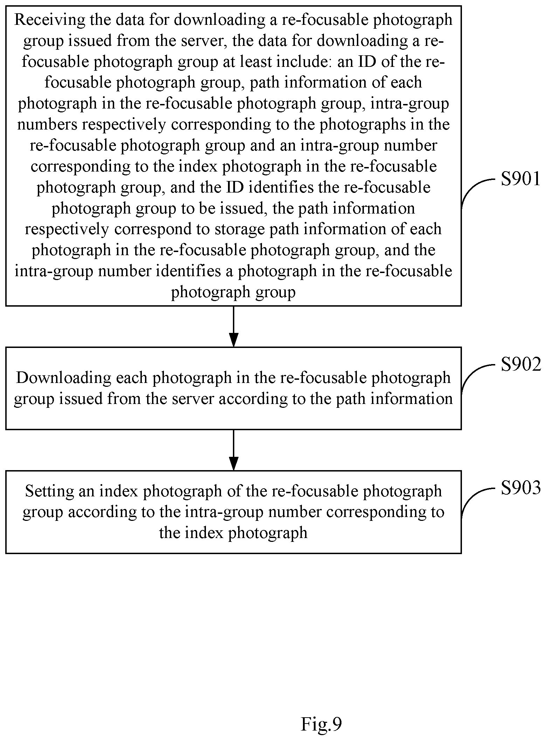

For a second terminal that supports display of re-focusable photographs, as shown in Fig. 9, implementation of step S803 may include the following steps.

In step S901, the data for downloading a re-focusable photograph group issued from the server is received, wherein the data for downloading a re-focusable photograph group at least include: an ID of the re-focusable photograph group, path information of each photograph in the re-focusable photograph group, intra-group numbers respectively corresponding to the photographs in the re-focusable photograph group and an intra-group number corresponding to the index photograph in the re-focusable photograph group, and the ID identifies the re-focusable photograph group to be issued, the path information respectively correspond to storage path information of each photograph in the re-focusable photograph group, and the intra-group number identifies a photograph in the re-focusable photograph group.

In step S902, each photograph in the re-focusable photograph group issued from the server are downloaded according to the path information.

In step S903, an index photograph of the re-focusable photograph group is set according to the intra-group number corresponding to the index photograph.

In this embodiment, during the time the server synchronizes a photograph downward, in case where the first terminal replaces the index photograph of the re-focusable photograph group that has been uploaded, not an index photograph to be replaced re-issued by the server, but the above-mentioned data for downloading a re-focusable photograph group issued from the server is received by the second terminal. This may equally save network resources occupied by synchronizing the photograph.

In the present disclosure, the index photograph of the re-focusable photograph group may be downloaded firstly by the second terminal, according to the intra-group number corresponding to the index photograph of the re-focusable photograph group.

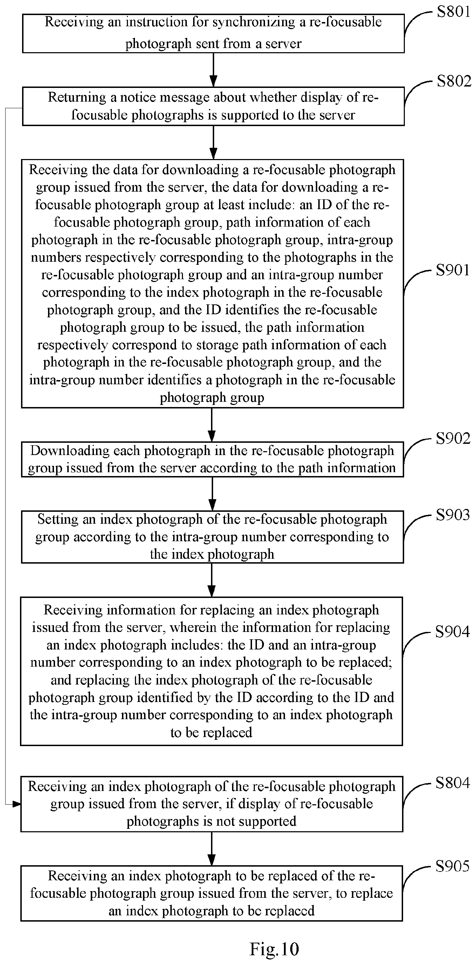

In case where the index photograph of the re-focusable photograph group needs to be replaced, based on the process shown in Fig. 9, the process as shown in Fig. 10 may further include the following steps.

In step 904, if display of re-focusable photographs is supported, information for replacing an index photograph issued from the server is received, wherein the information for replacing an index photograph includes: the ID and an intra-group number corresponding to an index photograph to be replaced; and the index photograph of the re-focusable photograph group identified by the ID is replaced according to the ID and the intra-group number corresponding to an index photograph to be replaced.

In step S905, if display of re-focusable photographs is not supported, an index photograph to be replaced of the re-focusable photograph group issued from the server is received, to replace an index photograph to be replaced.

It should be noted that, in this embodiments, an index photograph that the second terminal receives may be a thumbnail corresponding to the photograph or photograph data. In addition, each photograph in the re-focusable photograph group that the second terminal receives may be a thumbnail corresponding to the photograph respectively or photograph data.

In practical application, data amount of a thumbnail is typically smaller than that of an original photograph. In case where a thumbnail is synchronized, the demand of the user for generally exploring may be satisfied, and meantime the network traffic may be saved. In this case, only when the user clicks the thumbnail, the original photograph data may be downloaded from the server in the cloud. However, if network traffic is not a concern, the original photograph data may be directly synchronized.

Corresponding to the methods according to the above embodiments, a terminal for synchronizing a photograph according to an embodiment is provided by the present disclosure.

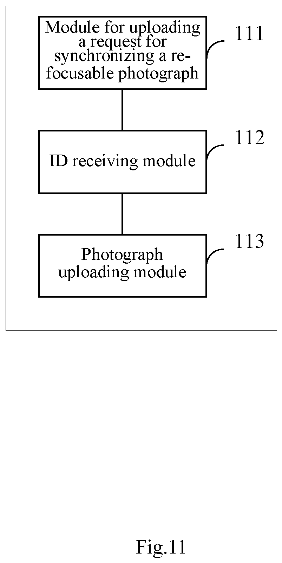

Fig. 11 is a block diagram showing a first terminal. Referring to Fig. 11, the first terminal may include:
a module for uploading a request for synchronizing a re-focusable photograph 111, configured to upload a request for synchronizing a re-focusable photograph to a server;
an ID receiving module 112, configured to receive an ID returned from the server, wherein the ID identifies a group of re-focusable photographs to be synchronized; and
a photograph uploading module 113, configured to upload data for uploading a re-focusable photograph group to the server, wherein the data for uploading a re-focusable photograph group at least includes: the ID, photograph data of each photograph in the re-focusable photograph group, intra-group numbers respectively corresponding to the photographs and an intra-group number corresponding to an index photograph in the re-focusable photograph group, and the intra-group number identifies a photograph in the re-focusable photograph group.

In the present disclosure, during the time a terminal uploads a re-focusable photograph group to be synchronized to a binding server in a cloud, the servers assigns an ID to the re-focusable photograph group, and the terminal assigns an intra-group number to each photograph in the re-focusable photograph group. After an index photograph is determined, an intra-group number corresponding to the index photograph is informed to the server. Since the server learns about each intra-group number of each of the photograph in the re-focusable photograph group, in case where the index photograph of the re-focusable photograph group uploaded by the terminal needs to be replaced subsequently, the index photograph to be replaced does not need to be re-uploaded, but only the intra-group number corresponding to the index photograph to be replaced and the corresponding ID need to be uploaded, thereby, network resources occupied by synchronizing the photograph may be saved.

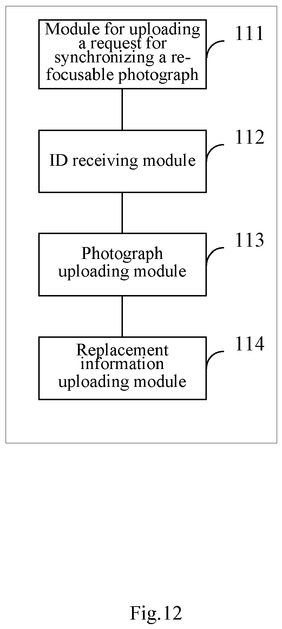

Fig. 12 shows a first terminal according to another embodiment, and the first terminal may further include:
a replacement information uploading module 114, configured to upload information for replacing an index photograph to the server in case where the index photograph of the re-focusable photograph group is to be replaced, wherein the index photograph of the re-focusable photograph group is replaced by the server, wherein the information for replacing an index photograph includes: the ID and an intra-group number corresponding to an index photograph to be replaced.

In this embodiment, since the server learns about each intra-group number of each of the photographs in the re-focusable photograph group, in case where the index photograph of the re-focusable photograph group uploaded by the first terminal needs to be replaced subsequently, the index photograph to be replaced does not need to be re-uploaded, but only the intra-group number corresponding to the index photograph to be replaced and the corresponding ID need to be uploaded, thereby, network resources occupied by synchronizing the photograph may be saved.

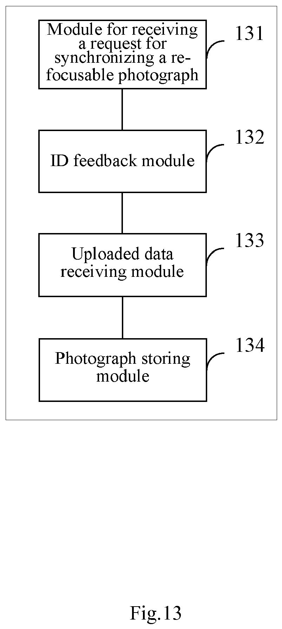

Corresponding to the first terminal according to above embodiments, Fig. 13 is a block diagram showing a server, and the server may include:
a module for receiving a request for synchronizing a re-focusable photograph 131, configured to receive a request for synchronizing a re-focusable photograph sent from a first terminal;
an ID feedback module 132, configured to return an ID to the first terminal, wherein the ID identifies a group of re-focusable photographs to be synchronized;
an uploaded data receiving module 133, configured to receive data for uploading a re-focusable photograph group uploaded from the first terminal, wherein the data for uploading a re-focusable photograph group at least includes: the ID, photograph data of each of the photographs in the re-focusable photograph group, intra-group numbers respectively corresponding to the photographs and an intra-group number corresponding to an index photograph in the re-focusable photograph group, and the intra-group number identifies a photograph in the re-focusable photograph group; and
a photograph storing module 134, configured to store photograph data of each photograph and intra-group numbers corresponding to each photograph in the re-focusable photograph group according to the ID, and determine an index photograph in the re-focusable photograph group according to the intra-group number corresponding to an index photograph.

In the present disclosure, during the time a terminal uploads a re-focusable photograph group to be synchronized to a binding server in a cloud, the servers assigns an ID to the re-focusable photograph group, and the terminal assigns an intra-group number to each photograph in the re-focusable photograph group. After an index photograph is determined, an intra-group number corresponding to the index photograph is informed to the server. Since the server learns about each intra-group number of each of the photograph in the re-focusable photograph group, in case where the index photograph of the re-focusable photograph group uploaded by the terminal needs to be replaced subsequently, the index photograph to be replaced does not need to be re-uploaded, but only the intra-group number corresponding to the index photograph to be replaced and the corresponding ID need to be uploaded, thereby, network resources occupied by synchronizing the photograph may be saved.

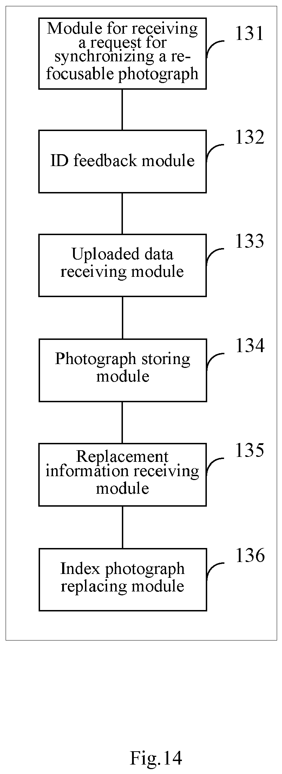

Fig. 14 shows a server according to another embodiment, and the server may further include:
a replacement information receiving module 135, configured to receive information for replacing an index photograph uploaded from the first terminal, wherein the information for replacing an index photograph includes: the ID and an intra-group number corresponding to an index photograph to be replaced; and
an index photograph replacing module 136, configured to replace the index photograph of the re-focusable photograph group identified by the ID, according to the ID and the intra-group number corresponding to an index photograph to be replaced.

In this embodiment, since the server learns about each intra-group number of each of the photographs in the re-focusable photograph group, in case where the index photograph of the re-focusable photograph group uploaded by the first terminal needs to be replaced subsequently, the index photograph to be replaced does not need to be re-uploaded, but only the intra-group number corresponding to the index photograph to be replaced and the corresponding ID need to be uploaded, thereby, network resources occupied by synchronizing the photograph may be saved. Since the server learns about each intra-group number of each of the photographs in the re-focusable photograph group, upon receiving the intra-group number corresponding to the index photograph to be replaced and the corresponding ID uploaded by the first terminal, the server may determine the index photograph to be replaced according to the intra-group number, and replace the index photograph.

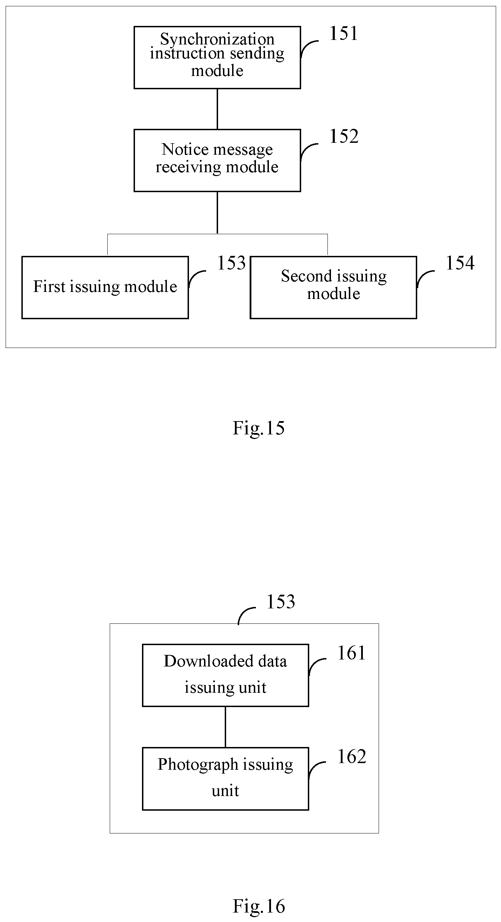

Fig. 15 shows a server for synchronizing a photograph downward according to an embodiment, and the server may include:
a synchronization instruction sending module 151, configured to send an instruction for synchronizing a re-focusable photograph to a second terminal;
a notice message receiving module 152, configured to receive a notice message about whether the second terminal supports display of re-focusable photographs returned from the second terminal;
a first issuing module 153, configured to issue data for downloading a re-focusable photograph group to the second terminal, if the second terminal supports display of re-focusable photographs; and
a second issuing module 154, configured to issue an index photograph of the re-focusable photograph group to the second terminal, if the second terminal does not support display of re-focusable photographs.

As shown in Fig. 16, in the server according to the embodiment, the first issuing module 153 includes:
a downloaded data issuing unit 161, configured to issue the data for downloading a re-focusable photograph group to the second terminal, wherein the data for downloading a re-focusable photograph group at least include: an ID of the re-focusable photograph group, path information of each photograph in the re-focusable photograph group, intra-group numbers respectively corresponding to the photographs in the re-focusable photograph group and an intra-group number corresponding to the index photograph in the re-focusable photograph group, and the ID identifies the re-focusable photograph group to be issued, the path information respectively correspond to storage path information of each photograph in the re-focusable photograph group, and the intra-group number identifies a photograph in the re-focusable photograph group; and
a photograph issuing unit 162, configured to issue each photograph in the re-focusable photograph group to the second terminal, and set an index photograph of the re-focusable photograph group according to the intra-group number corresponding to the index photograph.

In the present disclosure, the photograph issuing unit is configured to issue the index photograph of the re-focusable photograph group firstly to the second terminal, according to the intra-group number corresponding to the index photograph of the re-focusable photograph group.

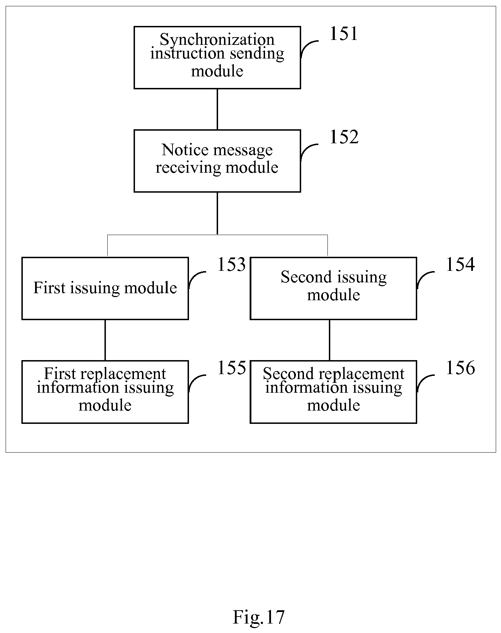

Fig. 17 shows a server according to an embodiment, and the server includes:
a first replacement information issuing module 155, configured to issue information for replacing an index photograph to the second terminal, wherein the second terminal replaces the index photograph of the re-focusable photograph group, if the second terminal supports display of re-focusable photographs, and the information for replacing an index photograph includes: the ID and an intra-group number corresponding to an index photograph to be replaced; and
a second replacement information issuing module 156, configured to issue an index photograph to be replaced of the re-focusable photograph group to the second terminal to replace an index photograph to be replaced, if the second terminal does not support display of re-focusable photographs.

In practical application, the index photograph issued to the second terminal may be a thumbnail corresponding to the photograph or photograph data. In addition, each of the photographs in the re-focusable photograph group issued to the second terminal may be a thumbnail corresponding to the photograph respectively or photograph data.

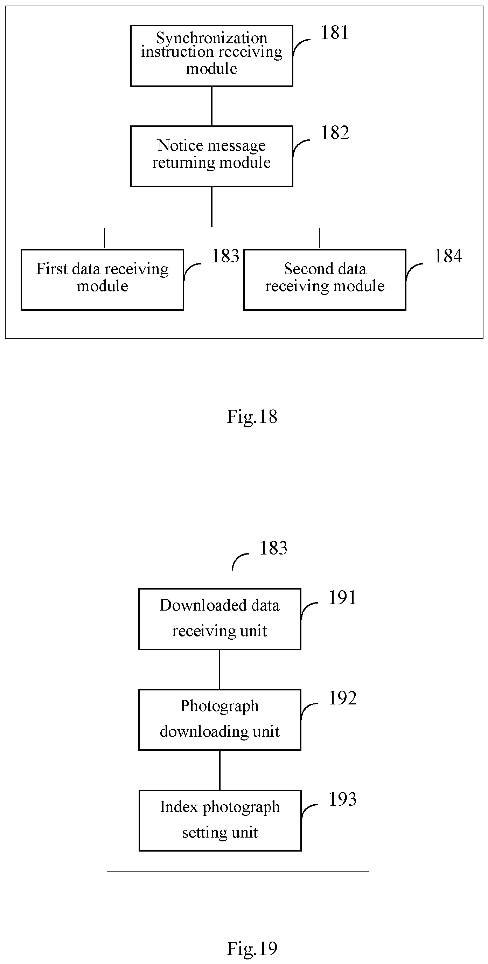

A block diagram showing a second terminal according to an embodiment is also provided by the present disclosure accordingly. As shown in Fig. 18, the second terminal according to an embodiment may include:
a synchronization instruction receiving module 181, configured to receive an instruction for synchronizing a re-focusable photograph sent from a server;
a notice message returning module 182, configured to return a notice message about whether display of re-focusable photographs is supported to the server;
a first data receiving module 183, configured to receive data for downloading a re-focusable photograph group issued from the server, if display of re-focusable photographs is supported; and
a second data receiving module 184, configured to receive an index photograph of the re-focusable photograph group issued from the server, if display of re-focusable photographs is not supported.

As shown in Fig. 19, in the second terminal according to an embodiment, the first data receiving module 183 may include:
a downloaded data receiving unit 191, configured to receive the data for downloading a re-focusable photograph group issued from the server, and the data for downloading a re-focusable photograph group at least include: an ID of the re-focusable photograph group, path information of each photograph in the re-focusable photograph group, intra-group numbers respectively corresponding to the photographs in the re-focusable photograph group and an intra-group number corresponding to the index photograph in the re-focusable photograph group, and the ID identifies the re-focusable photograph group to be issued, the path information respectively correspond to storage path information of each photograph in the re-focusable photograph group, and the intra-group number identifies a photograph in the re-focusable photograph group;
a photograph downloading unit 192, configured to download each photograph in the re-focusable photograph group issued from the server according to the path information; and
an index photograph setting unit 193, configured to set an index photograph of the re-focusable photograph group according to the intra-group number corresponding to the index photograph.

Wherein, the photograph downloading unit may be configured to download the index photograph of the re-focusable photograph group firstly, according to the intra-group number corresponding to the index photograph of the re-focusable photograph group.

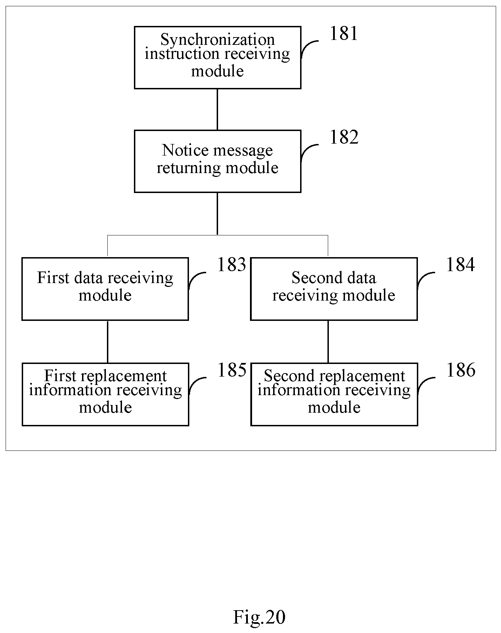

The second terminal according to an embodiment shown in Fig. 20 may further include:
a first replacement information receiving module 185, configured to receive information for replacing an index photograph issued from the server, if display of re-focusable photographs is supported, wherein the information for replacing an index photograph includes: the ID and an intra-group number corresponding to an index photograph to be replaced, and the index photograph of the re-focusable photograph group identified by the ID is replaced according to the ID and the intra-group number corresponding to an index photograph to be replaced; and
a second replacement information receiving module 186, configured to receive an index photograph to be replaced of the re-focusable photograph group issued from the server, to replace an index photograph to be replaced, if display of re-focusable photographs is not supported.

In practical application, the index photograph issued by the server may be a thumbnail corresponding to the photograph or photograph data. In addition, each of the photographs in the re-focusable photograph group issued by the server may be a thumbnail corresponding to the photograph respectively or photograph data.

With respect to the devices in the above embodiments, the specific manners for performing operations for individual modules therein have been described in detail in the embodiments with regarding to the relative methods, which will not be elaborated herein.

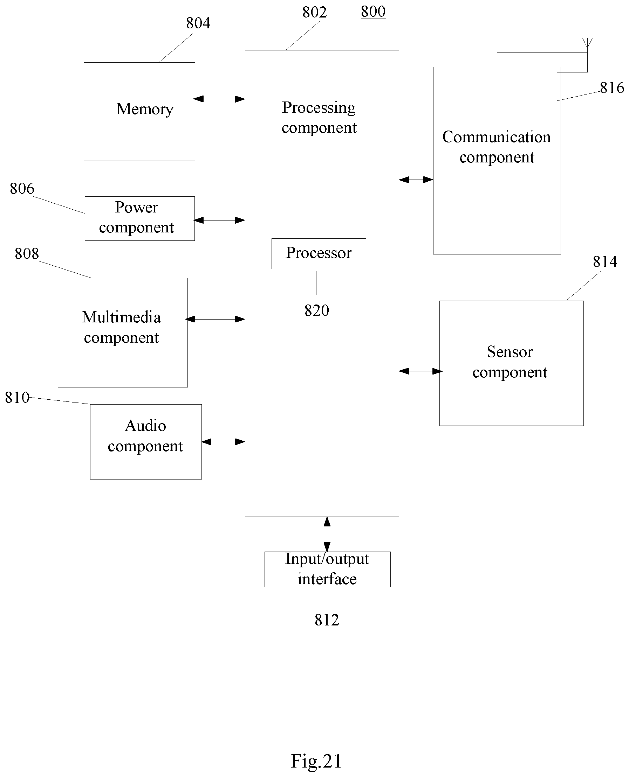

Fig. 21 is a block diagram showing a device for synchronizing a photograph 800 according to an exemplary embodiment. For example, the device 800 may be a mobile phone, a computer, a digital broadcast terminal, a messaging device, a gaming console, a tablet, a medical device, exercise equipment, a personal digital assistant, and the like.

Referring to Fig. 21, the device 800 may include one or more of the following components: a processing component 802, a memory 804, a power component 806, a multimedia component 808, an audio component 810, an input/output (I/O) interface 812, a sensor component 814 and a communication component 816.

The processing component 802 typically controls overall operations of the device 800, such as the operations associated with display, telephone calls, data communications, camera operations and recording operations. The processing component 802 may include one or more processors 820 to execute instructions to perform all or part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the device 800. Examples of such data include instructions for any applications or methods operated on the device 800, contact data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the device 800. The power component 806 may include a power management system, one or more power sources, and any other components associated with the generation, management, and distribution of power in the device 800.

The multimedia component 808 includes a screen providing an output interface between the device 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and the rear camera may receive an external multimedia datum while the device 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone ("MIC") configured to receive an external audio signal when the device 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the device 800. For instance, the sensor component 814 may detect an open/closed status of the device 800, relative positioning of components, e.g., the display and the keypad, of the device 800, a change in position of the device 800 or a component of the device 800, a presence or absence of user contact with the device 800, an orientation or an acceleration/deceleration of the device 800, and a change in temperature of the device 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the device 800 and other devices. The device 800 can access a wireless network based on a communication standard, such as WiFi, 2G, or 3G, or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology and other technologies.

In exemplary embodiments, the device 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors or other electronic components, for performing the above described methods.

In exemplary embodiments, there is also provided a non-transitory computer-readable storage medium including instructions, such as included in the memory 804, executable by the processor 820 in the device 800, for performing the above-described methods. For example, the non-transitory computer-readable storage medium may be a ROM, a RAM, a CD-ROM, a magnetic tape, a floppy disc, an optical data storage device and the like.

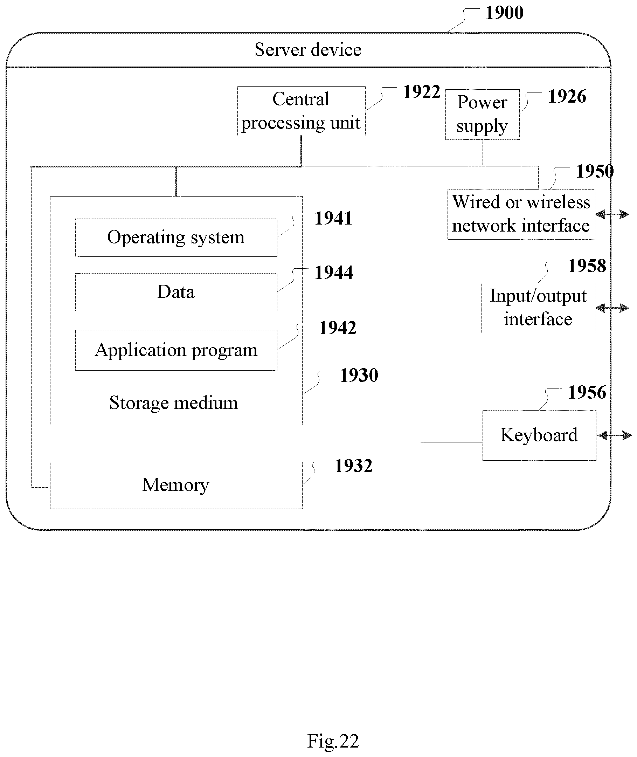

FIG. 22 is a block diagram showing a server according to an embodiment of the present disclosure. The server 1900 may vary in configuration or capabilities, and may include one or more central processing units (CPU) 1922 (for example, one or more processors), and a memory 1932, one or more storage media 1930 (for example, one or more mass storage devices) for storing application programs 1942 and data 1944. Wherein, the memory 1932 and the storage medium 1930 may be a transient or a persistent storage. The programs stored in the storage medium 1930 may include one or more modules (not shown in the Figures) each corresponding to a set of instructions in a terminal device. Further, the central processing unit 1922 is configured to communicate with the storage medium 1930 and execute the set of instructions in the storage medium 1930 on the server 1900.

The server 1900 may also include one or more power components 1926, one or more wired or wireless network interfaces 1950, and one or more input/output interfaces 1958, one or more keyboards 1956, and/or, one or more operating systems 1941, such as Windows ServerTM, Mac OS XTM, UnixTM, LinuxTM, FreeBSDTM, and the like.

Other embodiments of the disclosure may be apparent to those skilled in the art from consideration of the specification and practice of the disclosure disclosed here. It is intended that the specification and examples be considered as exemplary only.

It may be appreciated that the present invention is not limited to the exact construction that has been described above and illustrated in the accompanying drawings, and that various modifications and changes may be made without departing from the scope thereof. It is intended that the scope of the invention be limited by the appended claims.

## Claims

1. A method for synchronizing a photograph between a terminal and a server, the method comprises:
sending (S501) an instruction for synchronizing a re-focusable photograph to the terminal;
receiving (S502) a notice message about whether the terminal supports display of re-focusable photographs returned from the terminal;
issuing (S503) data for downloading a re-focusable photograph group to the terminal, if the terminal supports display of re-focusable photographs; and
issuing (S504) an index photograph of the re-focusable photograph group to the terminal, if the terminal does not support display of re-focusable photographs;
and further **characterized in that**, the issuing (S503) data for downloading a re-focusable photograph group to the terminal if the terminal supports display of re-focusable photographs comprises:
issuing (S601) the data for downloading a re-focusable photograph group to the terminal, wherein the data for downloading a re-focusable photograph group at least comprise: an ID of the re-focusable photograph group, path information of each photograph in the re-focusable photograph group, intra-group numbers respectively corresponding to the photographs in the re-focusable photograph group and an intra-group number corresponding to the index photograph in the re-focusable photograph group, and the ID identifies the re-focusable photograph group to be issued, the path information respectively correspond to storage path information of each photograph in the re-focusable photograph group, and the intra-group number identifies a photograph in the re-focusable photograph group; and
issuing (S602) each photograph in the re-focusable photograph group to the terminal, and setting an index photograph of the re-focusable photograph group according to the intra-group number corresponding to the index photograph;
and further **characterized in that**, in case where the index photograph of the re-focusable photograph group is to be replaced, the method further comprises:
issuing (S603) information for replacing an index photograph to the terminal if the terminal supports display of re-focusable photographs, wherein the terminal replaces the index photograph of the re-focusable photograph group, and the information for replacing an index photograph comprises: the ID and an intra-group number corresponding to an index photograph to be replaced; and
issuing (S504) an index photograph of the re-focusable photograph group to the terminal to replace an index photograph to be replaced, if the terminal does not support display of re-focusable photographs.

2. The method of claim 1, **characterized in that**, the issuing each photograph in the re-focusable photograph group to the terminal comprises:
issuing the index photograph of the re-focusable photograph group firstly to the terminal, according to the intra-group number corresponding to the index photograph of the re-focusable photograph group.

3. A method for synchronizing a photograph between a terminal and a server, the method comprises:
receiving (S801) an instruction for synchronizing a re-focusable photograph sent from the server;
returning (S802) a notice message about whether display of re-focusable photographs is supported to the server;
receiving (S803) data for downloading a re-focusable photograph group issued from the server, if display of re-focusable photographs is supported; and
receiving (S804) an index photograph of the re-focusable photograph group issued from the server, if display of re-focusable photographs is not supported;
and further **characterized in that**, the receiving data (S803) for downloading a re-focusable photograph group issued from the server if display of re-focusable photographs is supported, comprises:
receiving (S901) the data for downloading a re-focusable photograph group issued from the server, wherein the data for downloading a re-focusable photograph group at least comprises: an ID of the re-focusable photograph group, path information of each photograph in the re-focusable photograph group, intra-group numbers respectively corresponding to the photographs in the re-focusable photograph group and an intra-group number corresponding to the index photograph in the re-focusable photograph group, and the ID identifies the re-focusable photograph group to be issued, the path information respectively correspond to storage path information of each photograph in the re-focusable photograph group, and the intra-group number identifies a photograph in the re-focusable photograph group;
downloading (S902) each photograph in the re-focusable photograph group issued from the server according to the path information; and
setting (S903) an index photograph of the re-focusable photograph group according to the intra-group number corresponding to the index photograph;
and further **characterized in that**, in case where the index photograph of the re-focusable photograph group is to be replaced, the method further comprises:
receiving (S904) information for replacing an index photograph issued from the server, if display of re-focusable photographs is supported, wherein the information for replacing an index photograph comprises: the ID and an intra-group number corresponding to an index photograph to be replaced; and replacing the index photograph of the re-focusable photograph group identified by the ID according to the ID and the intra-group number corresponding to an index photograph to be replaced; and
receiving (S804) an index photograph of the re-focusable photograph group issued from the server, to replace an index photograph to be replaced, if display of re-focusable photographs is not supported.

4. The method of claim 3, **characterized in that**, the downloading (S902) each photograph in the re-focusable photograph group issued from the server according to the path information comprises:
downloading the index photograph of the re-focusable photograph group firstly, according to the intra-group number corresponding to the index photograph of the re-focusable photograph group.

5. A server (1900), the server comprises:
a synchronization instruction sending module (151), configured to send an instruction for synchronizing a re-focusable photograph to a terminal;
a notice message receiving module (152), configured to receive a notice message about whether the terminal supports display of re-focusable photographs returned from the terminal;
a first issuing module (153), configured to issue data for downloading a re-focusable photograph group to the terminal, if the terminal supports display of re-focusable photographs;
a second issuing module (154), configured to issue an index photograph of the re-focusable photograph group to the terminal, if the terminal does not support display of re-focusable photographs
the server **characterised in that** it comprises:
a downloaded data issuing unit (161), configured to issue the data for downloading a re-focusable photograph group to the terminal, wherein the data for downloading a re-focusable photograph group at least comprise: an ID of the re-focusable photograph group, path information of each photograph in the re-focusable photograph group, intra-group numbers respectively corresponding to the photographs in the re-focusable photograph group and an intra-group number corresponding to the index photograph in the re-focusable photograph group, and the ID identifies the re-focusable photograph group to be issued, the path information respectively correspond to storage path information of each photograph in the re-focusable photograph group, and the intra-group number identifies a photograph in the re-focusable photograph group;
a photograph issuing unit (162), configured to issue each photograph in the re-focusable photograph group to the terminal, and set an index photograph of the re-focusable photograph group according to the intra-group number corresponding to the index photograph;
a first replacement information issuing module (155), configured to issue information for replacing an index photograph to the terminal, if the terminal supports display of re-focusable photographs, wherein the terminal replaces the index photograph of the re-focusable photograph group, and the information for replacing an index photograph comprises: the ID and an intra-group number corresponding to an index photograph to be replaced; and
a second replacement information issuing module (156), configured to issue an index photograph of the re-focusable photograph group to the terminal to replace an index photograph to be replaced, if the terminal does not support display of re-focusable photographs.

6. A terminal (800), the terminal comprises:
a synchronization instruction receiving module (181), configured to receive an instruction for synchronizing a re-focusable photograph sent from a server;
a notice message returning module (182), configured to return a notice message about whether display of re-focusable photographs is supported to the server;
a first data receiving module (183), configured to receive data for downloading a re-focusable photograph group issued from the server, if display of re-focusable photographs is supported;
a second data receiving module (184), configured to receive an index photograph of the re-focusable photograph group issued from the server, if display of re-focusable photographs is not supported;
the terminal **characterised in that** it comprises:
a downloaded data receiving unit (191), configured to receive the data for downloading a re-focusable photograph group issued from the server, wherein the data for downloading a re-focusable photograph group at least comprises: an ID of the re-focusable photograph group, path information of each photograph in the re-focusable photograph group, intra-group numbers respectively corresponding to the photographs in the re-focusable photograph group and an intra-group number corresponding to the index photograph in the re-focusable photograph group, and the ID identifies the re-focusable photograph group to be issued, the path information respectively correspond to storage path information of each photograph in the re-focusable photograph group, and the intra-group number identifies a photograph in the re-focusable photograph group;
a photograph downloading unit (192), configured to download each photograph in the re-focusable photograph group issued from the server according to the path information;
an index photograph setting unit (193), configured to set an index photograph of the re-focusable photograph group according to the intra-group number corresponding to the index photograph;
a first replacement information receiving module (185), configured to receive information for replacing an index photograph issued from the server, if display of re-focusable photographs is supported, wherein the information for replacing an index photograph comprises: the ID and an intra-group number corresponding to an index photograph to be replaced; and replace the index photograph of the re-focusable photograph group identified by the ID according to the ID and the intra-group number corresponding to an index photograph to be replaced; and
a second replacement information receiving module (186), configured to receive an index photograph of the re-focusable photograph group issued from the server, to replace an index photograph to be replaced, if display of re-focusable photographs is not supported.

7. A computer program, which when executing on a processor of a server (1900), performs a method according to any one of claims 1 to 2.

8. A computer program, which when executing on a processor of a terminal (800), performs a method according to any one of claims 3 to 4.

## Patentansprüche

1. Verfahren zum Synchronisieren eines Fotos zwischen einem Terminal und einem Server, wobei das Verfahren Folgendes beinhaltet:
Senden (S501) eines Befehls zum Synchronisieren eines neu fokussierbaren Fotos zu dem Terminal;
Empfangen (S502) einer Benachrichtigung, ob das Terminal die Anzeige von von dem Terminal zurückgegebenen neu fokussierbaren Fotos unterstützt;
Ausgeben (S503) von Daten zum Herunterladen einer neu fokussierbaren Fotogruppe auf das Terminal, wenn das Terminal die Anzeige von neu fokussierbaren Fotos unterstützt; und
Ausgeben (S504) eines Indexfotos der neu fokussierbaren Fotogruppe an das Terminal, wenn das Terminal die Anzeige von neu fokussierbaren Fotos nicht unterstützt;
und ferner **dadurch gekennzeichnet, dass** das Ausgeben (S503) von Daten zum Herunterladen einer neu fokussierbaren Fotogruppe auf das Terminal, wenn das Terminal die Anzeige von neu fokussierbaren Fotos unterstützt, Folgendes beinhaltet:
Ausgeben (S601) der Daten zum Herunterladen einer neu fokussierbaren Fotogruppe auf das Terminal, wobei die Daten zum Herunterladen einer neu fokussierbaren Fotogruppe wenigstens Folgendes umfassen: eine ID der neu fokussierbaren Fotogruppe, Pfadinformationen jedes Fotos in der neu fokussierbaren Fotogruppe, Intra-Gruppennummern, die jeweils den Fotos in der neu fokussierbaren Fotogruppe entsprechen, und eine Intra-Gruppennummer entsprechend dem Indexfoto in der neu fokussierbaren Fotogruppe, und die ID die auszugebende neu fokussierbare Fotogruppe identifiziert, die Pfadinformationen jeweils Speicherpfadinformationen jedes Fotos in der neu fokussierbaren Fotogruppe entsprechen, und die Intra-Gruppennummer ein Foto in der neu fokussierbaren Fotogruppe identifiziert; und
Ausgeben (S602) jedes Fotos in der neu fokussierbaren Fotogruppe an das Terminal und Einstellen eines Indexfotos der neu fokussierbaren Fotogruppe gemäß der Intra-Gruppennummer entsprechend dem Indexfoto;
und ferner **dadurch gekennzeichnet, dass** das Verfahren, falls das Indexfoto der neu fokussierbaren Fotogruppe ersetzt werden soll, ferner Folgendes beinhaltet:
Ausgeben (S603) von Informationen zum Ersetzen eines Indexfotos an das Terminal, wenn das Terminal die Anzeige von neu fokussierbaren Fotos unterstützt, wobei das Terminal das Indexfoto der neu fokussierbaren Fotogruppe ersetzt, und die Informationen zum Ersetzen eines Indexfotos Folgendes umfassen: die ID und eine Intra-Gruppennummer entsprechend einem zu ersetzenden Indexfoto; und
Ausgeben (S504) eines Indexfotos der neu fokussierbaren Fotogruppe an das Terminal zum Ersetzen eines zu ersetzenden Indexfotos, wenn das Terminal die Anzeige von neu fokussierbaren Fotos nicht unterstützt.

2. Verfahren nach Anspruch 1, **dadurch gekennzeichnet, dass** das Ausgeben jedes Fotos in der neu fokussierbaren Fotogruppe an das Terminal Folgendes beinhaltet:
Ausgeben des Indexfotos der neu fokussierbaren Fotogruppe zuerst an das Terminal gemäß der Intra-Gruppennummer entsprechend dem Indexfoto der neu fokussierbaren Fotogruppe.

3. Verfahren zum Synchronisieren eines Fotos zwischen einem Terminal und einem Server, wobei das Verfahren Folgendes beinhaltet:
Empfangen (S801) eines Befehls zum Synchronisieren eines vom Server gesendeten neu fokussierbaren Fotos;
Zurückgeben (S802) einer Benachrichtigung, ob die Anzeige von neu fokussierbaren Fotos dem Server unterstützt wird;
Empfangen (S803) von Daten zum Herunterladen einer von dem Server ausgegebenen neu fokussierbaren Fotogruppe, wenn die Anzeige von neu fokussierbaren Fotos unterstützt wird; und
Empfangen (S804) eines Indexfotos der vom Server ausgegebenen neu fokussierbaren Fotogruppe, wenn die Anzeige von neu fokussierbaren Fotos nicht unterstützt wird;
und ferner **dadurch gekennzeichnet, dass** das Empfangen von Daten (S803) zum Herunterladen einer vom Server ausgegebenen neu fokussierbaren Fotogruppe, wenn die Anzeige von neu fokussierbaren Fotos unterstützt wird, Folgendes beinhaltet:
Empfangen (S901) der Daten zum Herunterladen einer vom Server ausgegebenen neu fokussierbaren Fotogruppe, wobei die Daten zum Herunterladen einer neu fokussierbaren Fotogruppe wenigstens Folgendes umfassen: eine ID der neu fokussierbaren Fotogruppe, Pfadinformationen jedes Fotos in der neu fokussierbaren Fotogruppe, Intra-Gruppennummern jeweils entsprechend den Fotos in der neu fokussierbaren Fotogruppe und eine Intra-Gruppennummer entsprechend dem Indexfoto in der neu fokussierbaren Fotogruppe, und die ID die auszugebende neu fokussierbare Fotogruppe identifiziert, die Pfadinformationen jeweils Speicherpfadinformationen jedes Fotos in der neu fokussierbaren Fotogruppe entsprechen und die Intra-Gruppennummer ein Foto in der neu fokussierbaren Fotogruppe identifiziert;
Herunterladen (S902) jedes Fotos in der vom Server ausgegebenen neu fokussierbaren Fotogruppe gemäß den Pfadinformationen; und
Einstellen (S903) eines Indexfotos der neu fokussierbaren Fotogruppe gemäß der Intra-Gruppennummer entsprechend dem Indexfoto;
und ferner **dadurch gekennzeichnet, dass** das Verfahren, falls das Indexfoto der neu fokussierbaren Fotogruppe ersetzt werden soll, ferner Folgendes beinhaltet:
Empfangen (S904) von Informationen zum Ersetzen eines vom Server ausgegebenen Indexfotos, wenn die Anzeige von neu fokussierbaren Fotos unterstützt wird, wobei die Informationen zum Ersetzen eines Indexfotos Folgendes umfassen: die ID und eine Intra-Gruppennummer entsprechend einem zu ersetzenden Indexfoto; und Ersetzen des Indexfotos der durch die ID identifizierten neu fokussierbaren Fotogruppe gemäß der ID und der Intra-Gruppennummer entsprechend einem zu ersetzenden Indexfoto; und
Empfangen (S804) eines Indexfotos der vom Server ausgegebenen neu fokussierbaren Fotogruppe zum Ersetzen eines zu ersetzenden Indexfotos, wenn die Anzeige von neu fokussierbaren Fotos nicht unterstützt wird.

4. Verfahren nach Anspruch 3, **dadurch gekennzeichnet, dass** das Herunterladen (S902) jedes Fotos in der vom Server ausgegebenen neu fokussierbaren Fotogruppe gemäß den Pfadinformationen Folgendes beinhaltet:
Herunterladen des Indexfotos der neu fokussierbaren Fotogruppe zuerst, gemäß der Intra-Gruppennummer entsprechend dem Indexfoto der neu fokussierbaren Fotogruppe.

5. Server (1900), wobei der Server Folgendes umfasst:
ein Synchronisationsbefehlssendemodul (151), konfiguriert zum Senden eines Befehls zum Synchronisieren eines neu fokussierbaren Fotos mit einem Terminal;
ein Benachrichtigungsempfangsmodul (152), konfiguriert zum Empfangen einer Benachrichtigung, ob das Terminal die Anzeige von vom Terminal zurückgegebenen neu fokussierbaren Fotos unterstützt;
ein erstes Ausgabemodul (153), konfiguriert zum Ausgeben von Daten zum Herunterladen einer neu fokussierbaren Fotogruppe auf das Terminal, wenn das Terminal die Anzeige von neu fokussierbaren Fotos unterstützt;
ein zweites Ausgabemodul (154), konfiguriert zum Ausgeben eines Indexfotos der neu fokussierbaren Fotogruppe an das Terminal, wenn das Terminal die Anzeige von neu fokussierbaren Fotos nicht unterstützt, wobei der Server **dadurch gekennzeichnet ist, dass** er Folgendes umfasst:
eine Heruntergeladene-Daten-Ausgabeeinheit (161), konfiguriert zum Ausgeben der Daten zum Herunterladen einer neu fokussierbaren Fotogruppe auf das Terminal, wobei die Daten zum Herunterladen einer neu fokussierbaren Fotogruppe wenigstens Folgendes umfassen: eine ID der neu fokussierbaren Fotogruppe, Pfadinformationen jedes Fotos in der neu fokussierbaren Fotogruppe, Intra-Gruppennummern jeweils entsprechend den Fotos in der neu fokussierbaren Fotogruppe und eine Intra-Gruppennummer entsprechend dem Indexfoto in der neu fokussierbaren Fotogruppe, und die ID die auszugebende neu fokussierbare Fotogruppe identifiziert, die Pfadinformationen jeweils Speicherpfadinformationen jedes Fotos in der neu fokussierbaren Fotogruppe entsprechen und die Intra-Gruppennummer ein Foto in der neu fokussierbaren Fotogruppe identifiziert;
eine Fotoausgabeeinheit (162), konfiguriert zum Ausgeben jedes Fotos in der neu fokussierbaren Fotogruppe an das Terminal und zum Einstellen eines Indexfotos der neu fokussierbaren Fotogruppe gemäß der Intra-Gruppennummer entsprechend dem Indexfoto;
ein erstes Ersatzinformationsausgabemodul (155), konfiguriert zum Ausgeben von Informationen zum Ersetzen eines Indexfotos an das Terminal, wenn das Terminal die Anzeige von neu fokussierbaren Fotos unterstützt, wobei das Terminal das Indexfoto der neu fokussierbaren Fotogruppe ersetzt, und die Informationen zum Ersetzen eines Indexfotos Folgendes umfassen: die ID und eine Intra-Gruppennummer entsprechend einem zu ersetzenden Indexfoto; und
ein zweites Ersatzinformationsausgabemodul (156), konfiguriert zum Ausgeben eines Indexfotos der neu fokussierbaren Fotogruppe an das Terminal zum Ersetzen eines zu ersetzenden Indexfotos, wenn das Terminal die Anzeige von neu fokussierbaren Fotos nicht unterstützt.

6. Terminal (800), wobei das Terminal Folgendes umfasst:
ein Synchronisationsbefehlsempfangsmodul (181), konfiguriert zum Empfangen eines Befehls zum Synchronisieren eines von einem Server gesendeten neu fokussierbaren Fotos;
ein Benachrichtigungsrückgabemodul (182), konfiguriert zum Zurückgeben einer Benachrichtigung, ob die Anzeige von neu fokussierbaren Fotos dem Server unterstützt wird;
ein erstes Datenempfangsmodul (183), konfiguriert zum Empfangen von Daten zum Herunterladen einer vom Server ausgegebenen neu fokussierbaren Fotogruppe, wenn die Anzeige von neu fokussierbaren Fotos unterstützt wird;
ein zweites Datenempfangsmodul (184), konfiguriert zum Empfangen eines Indexfotos der vom Server ausgegebenen neu fokussierbaren Fotogruppe, wenn die Anzeige von neu fokussierbaren Fotos nicht unterstützt wird;
wobei das Terminal **dadurch gekennzeichnet ist, dass** es Folgendes umfasst:
eine Heruntergeladene-Daten-Empfangseinheit (191), konfiguriert zum Empfangen der Daten zum Herunterladen einer vom Server ausgegebenen neu fokussierbaren Fotogruppe, wobei die Daten zum Herunterladen einer neu fokussierbaren Fotogruppe wenigstens Folgendes umfassen: eine ID der neu fokussierbaren Fotogruppe, Pfadinformationen jedes Fotos in der neu fokussierbaren Fotogruppe, Intra-Gruppennummern jeweils entsprechend den Fotos in der neu fokussierbaren Fotogruppe und eine Intra-Gruppennummer entsprechend dem Indexfoto in der neu fokussierbaren Fotogruppe, und die ID die auszugebende neu fokussierbare Fotogruppe identifiziert, die Pfadinformationen jeweils den Speicherpfadinformationen jedes Fotos in der neu fokussierbaren Fotogruppe entsprechen und die Intra-Gruppennummer ein Foto in der neu fokussierbaren Fotogruppe identifiziert;
eine Fotoherunterladeeinheit (192), konfiguriert zum Herunterladen jedes Fotos in der vom Server ausgegebenen neu fokussierbaren Fotogruppe gemäß den Pfadinformationen;
eine Indexfotoeinstelleinheit (193), konfiguriert zum Einstellen eines Indexfotos der neu fokussierbaren Fotogruppe gemäß der Intra-Gruppennummer entsprechend dem Indexfoto;
ein erstes Ersatzinformationsempfangsmodul (185), konfiguriert zum Empfangen von Informationen zum Ersetzen eines vom Server ausgegebenen Indexfotos, wenn die Anzeige von neu fokussierbaren Fotos unterstützt wird, wobei die Informationen zum Ersetzen eines Indexfotos Folgendes umfassen: die ID und eine Intra-Gruppennummer entsprechend einem zu ersetzenden Indexfoto; und Ersetzen des Indexfotos der durch die ID identifizierten neu fokussierbaren Fotogruppe gemäß der ID und der Intra-Gruppennummer entsprechend einem zu ersetzenden Indexfoto; und
ein zweites Ersatzinformationsempfangsmodul (186), konfiguriert zum Empfangen eines Indexfotos der vom Server ausgegebenen neu fokussierbaren Fotogruppe zum Ersetzen eines zu ersetzenden Indexfotos, wenn die Anzeige von neu fokussierbaren Fotos nicht unterstützt wird.

7. Computerprogramm, das bei Ausführung auf einem Prozessor eines Servers (1900) ein Verfahren nach einem der Ansprüche 1 bis 2 durchführt.

8. Computerprogramm, das bei Ausführung auf einem Prozessor eines Terminals (800) ein Verfahren nach einem der Ansprüche 3 bis 4 durchführt.

## Revendications

1. Procédé de synchronisation d'une photographie entre un terminal et un serveur, le procédé comprenant :
l'envoi (S501) d'une instruction de synchronisation d'une photographie refocalisable au terminal ;
la réception (S502) d'un message d'avis indiquant que le terminal prend en charge ou non l'affichage de photographies refocalisables renvoyé par le terminal ;
la délivrance (S503) au terminal de données pour télécharger un groupe de photographies refocalisables, si le terminal prend en charge l'affichage de photographies refocalisables ; et
la délivrance (S504) au terminal d'une photographie d'indexation du groupe de photographies refocalisables, si le terminal ne prend pas en charge l'affichage de photographies refocalisables ;
et **caractérisé en outre en ce que**, la délivrance (S503) au terminal de données pour télécharger un groupe de photographies refocalisables si le terminal prend en charge l'affichage de photographies refocalisables comprend :
la délivrance (S601) au terminal des données pour télécharger un groupe de photographies refocalisables, les données pour télécharger un groupe de photographies refocalisables comprenant au moins : une ID du groupe de photographies refocalisables, des informations de chemin de chaque photographie dans le groupe de photographies refocalisables, des numéros intra-groupe correspondant respectivement aux photographies dans le groupe de photographies refocalisables et un numéro intra-groupe correspondant à la photographie d'indexation dans le groupe de photographies refocalisables, et l'ID identifiant le groupe de photographies refocalisables à délivrer, les informations de chemin correspondant respectivement à des informations de chemin de mémorisation de chaque photographie dans le groupe de photographies refocalisables, et le numéro intra-groupe identifiant une photographie dans le groupe de photographies refocalisables ; et
la délivrance (S602) au terminal de chaque photographie dans le groupe de photographies refocalisables, et le réglage d'une photographie d'indexation du groupe de photographies refocalisables conformément au numéro intra-groupe correspondant à la photographie d'indexation ;
et **caractérisé en outre en ce que**, quand la photographie d'indexation du groupe de photographies refocalisables doit être remplacée, le procédé comprend en outre :
la délivrance (S603) au terminal d'informations pour remplacer une photographie d'indexation au terminal si le terminal prend en charge l'affichage de photographies refocalisables, dans lequel le terminal remplace la photographie d'indexation du groupe de photographies refocalisables, et les informations pour remplacer une photographie d'indexation comprennent : l'ID et un numéro intra-groupe correspondant à une photographie d'indexation à remplacer ; et
la délivrance (S504) d'une photographie d'indexation du groupe de photographies refocalisables au terminal pour remplacer une photographie d'indexation à remplacer, si le terminal ne prend pas en charge l'affichage de photographies refocalisables.

2. Procédé selon la revendication 1, **caractérisé en ce que**, la délivrance de chaque photographie dans le groupe de photographies refocalisables au terminal comprend :
la délivrance de la photographie d'indexation du groupe de photographies refocalisables tout d'abord au terminal, conformément au numéro intra-groupe correspondant à la photographie d'indexation du groupe de photographies refocalisables.

3. Procédé de synchronisation d'une photographie entre un terminal et un serveur, le procédé comprenant :
la réception (S801) d'une instruction de synchronisation d'une photographie refocalisable envoyée par le serveur ;
le renvoi (S802) d'un message d'avis indiquant que l'affichage de photographies refocalisables est pris en charge ou non par le serveur ;
la réception (S803) de données pour télécharger un groupe de photographies refocalisables délivrées par le serveur, si l'affichage de photographies refocalisables est pris en charge ; et
la réception (S804) d'une photographie d'indexation du groupe de photographies refocalisables délivrée par le serveur, si l'affichage de photographies refocalisables n'est pas pris en charge ;
et **caractérisé en outre en ce que**, la réception de données (S803) pour télécharger un groupe de photographies refocalisables délivrée par le serveur si l'affichage de photographies refocalisables est pris en charge, comprend :
la réception (S901) de données pour télécharger un groupe de photographies refocalisables délivrées par le serveur, les données pour télécharger un groupe de photographies refocalisables comprenant au moins : une ID du groupe de photographies refocalisables, des informations de chemin de chaque photographie dans le groupe de photographies refocalisables, des numéros intra-groupe correspondant respectivement aux photographies dans le groupe de photographies refocalisables et un numéro intra-groupe correspondant à la photographie d'indexation dans le groupe de photographies refocalisables, et l'ID identifiant le groupe de photographies refocalisables à délivrer, les informations de chemin correspondant respectivement à des informations de chemin de mémorisation de chaque photographie dans le groupe de photographies refocalisables, et le numéro intra-groupe identifiant une photographie dans le groupe de photographies refocalisables ;
le téléchargement (S902) de chaque photographie dans le groupe de photographies refocalisables délivrée par le serveur conformément aux informations de chemin ; et
le réglage (S903) d'une photographie d'indexation du groupe de photographies refocalisables conformément au numéro intra-groupe correspondant à la photographie d'indexation ;
et **caractérisé en outre en ce que**, quand la photographie d'indexation du groupe de photographies refocalisables doit être remplacée, le procédé comprend en outre :
la réception (S904) d'informations pour remplacer une photographie d'indexation délivrées par le serveur, si l'affichage de photographies refocalisables est pris en charge, les informations pour remplacer une photographie d'indexation comprenant : l'ID et un numéro intra-groupe correspondant à une photographie d'indexation à remplacer ; et le remplacement de la photographie d'indexation du groupe de photographies refocalisables identifiée par l'ID conformément à l'ID et au numéro intra-groupe correspondant à une photographie d'indexation à remplacer ; et
la réception (S804) d'une photographie d'indexation du groupe de photographies refocalisables délivrée par le serveur, pour remplacer une photographie d'indexation à remplacer, si l'affichage de photographies refocalisables n'est pas pris en charge.

4. Procédé selon la revendication 3, **caractérisé en ce que**, le téléchargement (S902) de chaque photographie dans le groupe de photographies refocalisables délivrée par le serveur conformément aux informations de chemin comprend :
le téléchargement tout d'abord de la photographie d'indexation du groupe de photographies refocalisables, conformément au numéro intra-groupe correspondant à la photographie d'indexation du groupe de photographies refocalisables.

5. Serveur (1900), le serveur comprenant:
un module d'envoi d'une instruction de synchronisation (151), configuré pour envoyer à un terminal une instruction de synchronisation d'une photographie refocalisable ;
un module de réception de message d'avis (152), configuré pour recevoir un message d'avis indiquant que le terminal prend en charge ou non l'affichage de photographies refocalisables renvoyé par le terminal ;
un premier module de délivrance (153), configuré pour délivrer au terminal des données de téléchargement d'un groupe de photographies refocalisables, si le terminal prend en charge l'affichage de photographies refocalisables ;
un second module de délivrance (154), configuré pour délivrer au terminal une photographie d'indexation du groupe de photographies refocalisables, si le terminal ne prend pas en charge l'affichage de photographies refocalisables ;
le serveur étant **caractérisé en ce qu'**il comprend :
une unité de délivrance de données téléchargées (161), configurée pour délivrer au terminal les données pour télécharger un groupe de photographies refocalisables, les données pour télécharger un groupe de photographies refocalisables comprenant au moins : une ID du groupe de photographies refocalisables, des informations de chemin de chaque photographie dans le groupe de photographies refocalisables, des numéros intra-groupe correspondant respectivement aux photographies dans le groupe de photographies refocalisables et un numéro intra-groupe correspondant à la photographie d'indexation dans le groupe de photographies refocalisables, et l'ID identifiant le groupe de photographies refocalisables à délivrer, les informations de chemin correspondant respectivement à des informations de chemin de mémorisation de chaque photographie dans le groupe de photographies refocalisables, et le numéro intra-groupe identifiant une photographie dans le groupe de photographies refocalisables ;
une unité de délivrance de photographies (162), configurée pour délivrer au terminal chaque photographie dans le groupe de photographies refocalisables, et régler une photographie d'indexation du groupe de photographies refocalisables conformément au numéro intra-groupe correspondant à la photographie d'indexation ;
un premier module de délivrance d'informations de remplacement (155), configuré pour délivrer au terminal des informations pour remplacer une photographie d'indexation, si le terminal prend en charge l'affichage de photographies refocalisables, dans lequel le terminal remplace la photographie d'indexation du groupe de photographies refocalisables, et les informations pour remplacer une photographie d'indexation comprennent : l'ID et un numéro intra-groupe correspondant à une photographie d'indexation à remplacer ; et
le second module de délivrance d'informations de remplacement (156), configuré pour délivrer au terminal une photographie d'indexation du groupe de photographies refocalisables pour remplacer une photographie d'indexation à remplacer, si le terminal ne prend pas en charge l'affichage de photographies refocalisables.

6. Terminal (800), le terminal comprenant :
un module de réception d'instruction de synchronisation (181), configuré pour recevoir une option de synchronisation d'une photographie refocalisable envoyée par un serveur ;
un module de renvoi de message d'avis (182), configuré pour renvoyer au serveur un message d'avis indiquant que l'affichage de photographies refocalisables est pris en charge ou non ;
un premier module de réception de données (183), configuré pour recevoir des données pour télécharger un groupe de photographies refocalisables délivrées par le serveur, si l'affichage de photographies refocalisables est pris en charge ;
un second module de réception de données (184), configuré pour recevoir une photographie d'indexation du groupe de photographies refocalisables délivrée par le serveur, si l'affichage de photographies refocalisables n'est pas pris en charge ;
le terminal étant **caractérisé en ce qu'**il comprend :
une unité de réception de données téléchargées (191), configurée pour recevoir les données pour télécharger un groupe de photographies refocalisables délivrées par le serveur, les données pour télécharger un groupe de photographie refocalisables comprenant au moins : une ID du groupe de photographies refocalisables, des informations de chemin de chaque photographie dans le groupe de photographies refocalisables, des numéros intra-groupe correspondant respectivement aux photographies dans le groupe de photographies refocalisables et un numéro intra-groupe correspondant à la photographie d'indexation dans le groupe de photographies refocalisables, et l'ID identifiant le groupe de photographies refocalisables à délivrer, les informations de chemin correspondant respectivement à des informations de chemin de mémorisation de chaque photographie dans le groupe de photographies refocalisables, et le numéro intra-groupe identifiant une photographie dans le groupe de photographies refocalisables ;
une unité de téléchargement de photographies (192), configurée pour télécharger chaque photographie dans le groupe de photographie refocalisables délivrée par le serveur conformément aux informations de chemin ;
une unité de réglage de photographie d'indexation (193), configurée pour régler une photographie d'indexation du groupe de photographie refocalisables conformément au numéro intra-groupe correspondant à la photographie d'indexation ;
un premier module de réception d'informations de remplacement (185), configuré pour recevoir des informations pour remplacer une photographie d'indexation délivrée par le serveur, si l'affichage de photographies refocalisables est pris en charge, les informations pour remplacer une photographie d'indexation comprenant : l'ID et un numéro intra-groupe correspondant à une photographie d'indexation à remplacer ; et remplacer la photographie d'indexation du groupe de photographies refocalisables identifiée par l'ID conformément à l'ID et au numéro intra-groupe correspondant à une photographie d'indexation à remplacer ; et
un second module de réception d'informations de remplacement (186), configuré pour recevoir une photographie d'indexation du groupe de photographies refocalisables délivrée par le serveur, pour remplacer une photographie d'indexation à remplacer, si l'affichage de photographies refocalisables n'est pas pris en charge.

7. Programme informatique qui, à son exécution sur un processeur d'un serveur (1900), réalise un procédé selon l'une quelconque des revendications 1 à 2.

8. Programme informatique qui, à son exécution sur un processeur d'un terminal (800), réalise un procédé selon l'une quelconque des revendications 3 à 4.
